(19) Europäisches Patentamt
European Patent Office
Office européen des brevets

(11) **EP 2 961 178 B1**

## (12) EUROPEAN PATENT SPECIFICATION

(45) Date of publication and mention
of the grant of the patent:
**06.06.2018 Bulletin 2018/23**

(21) Application number: **15171435.9**

(22) Date of filing: **10.06.2015**

(51) Int Cl.:
*H04N 21/443* (2011.01)  *H04N 21/426* (2011.01)
*H04N 21/432* (2011.01)  *H04N 21/436* (2011.01)
*H04N 21/43* (2011.01)  *H04N 5/765* (2006.01)
*H04N 21/6377* (2011.01)  *G06F 1/32* (2006.01)
*H04N 21/433* (2011.01)

(54) **STORAGE DEVICE, CONTENT REPRODUCTION SYSTEM, OPERATION CONTROL METHOD IN STORAGE DEVICE, AND PROGRAM PRODUCT**

SPEICHERVORRICHTUNG, INHALTSWIEDERGABESYSTEM, BETRIEBSSTEUERUNGSVERFAHREN IN SPEICHERVORRICHTUNG UND PROGRAMMPRODUKT

DISPOSITIF DE STOCKAGE, SYSTÈME DE REPRODUCTION DE CONTENU, PROCÉDÉ DE COMMANDE DE FONCTIONNEMENT DE DISPOSITIF DE STOCKAGE ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2014 JP 2014131419**

(43) Date of publication of application:
**30.12.2015 Bulletin 2015/53**

(73) Proprietor: **Buffalo Inc.**
**Aichi 460-8315 (JP)**

(72) Inventor: **TAKAHASHI, Kenji**
**Nagoya-shi, Aichi 460-8315 (JP)**

(74) Representative: **SR Huebner - Munich**
**Patentanwaltspartnerschaft mbB**
**Prinzregentenplatz 11**
**81675 München (DE)**

(56) References cited:
**JP-A- 2005 166 172**   **US-A- 5 170 159**
**US-A1- 2006 008 256**   **US-A1- 2006 067 188**
**US-A1- 2012 183 270**   **US-B1- 6 583 947**

**Description**

BACKGROUND OF THE DISCLOSURE

Technical Field

The present disclosure relates to a storage device, a content reproduction system, an operation control method in a storage device, and a program product.

Related Arts

Environmentally-conscious design (eco-design) is desired not only in industrial electrical equipment but also in standard home electrical appliances. For example, the European Commission has issued the "framework directive relating to eco-design of energy-related product (ErP)" (hereinafter, referred to as the ErP directive) and mandates eco-design regarding overall products relating to energy. This ErP directive includes eco-design requirements relating to the standby power consumption of electrical and electronic equipment for home and office, and it is required that the standby power is set to 0.5 W or lower if it is determined that a user has not used equipment for a certain time (refer to European Commission Regulation 801/2013 [searched on May 12, 2014], the Internet <URL: http://eur-lex.europa.eu/LexUriServ/LexUriServ.do?uri=0J:L: 2013:225:0001:0012:EN:PDF>).

To realize the above-described ErP directive in a storage device in which data is stored, it will be effective to employ the following operation control procedure. Specifically, the operation of this storage device is continued if it is detected that a user is using the storage device, and the storage device stops its own operation if it is detected that the user has not used the storage device for a certain time.

However, there is the following problem in the case of carrying out the above-described operation control procedure in the storage device in which content data is stored. Specifically, the storage device in which content data is stored receives an instruction to transmit content data from a reproducing device connected to the storage device, and transmits the content data to the reproducing device on the basis of the received transmission instruction. Thereafter, at the timing after the elapse of a certain time from the end of the transmission of the content data, possibly the storage device itself determines that the storage device has not been used for a certain time and consequently the storage device stops its own operation.

Specifically, in some cases, the content data is music data and plural music data are categorized in units of album. Meanwhile, in some cases, even when an instruction to transmit content data in units of album is made by a user, the storage device transmits the content data one by one in units of individual content data because of the capacity of a buffer memory or a cache memory on the transmitting device side. In this case, a time period in which it is determined that content data is not being transmitted, i.e. the storage device is not being used, is generated. If this time period is equal to or longer than the above-described certain time, possibly the storage device stops its own operation in the operation of transmitting the content data in units of album.

There has been proposed a technique in which, in a reproducing device that reproduces recording media such as a compact disc (CD), the total reproduction time of music data (main information) is detected and the setting time of a timer is changed to the detected total reproduction time (refer to Japanese Patent Laid-open No. 2005-166172). However, when this technique is applied to the storage device in which content data is stored, because the end timing of transmission of content data is not constant attributed to various causes, nevertheless possibly the storage device stops its own operation in the operation of transmitting the content data in units of album when the setting time of the timer is changed to the total reproduction time of the content data.

U.S. Patent 5 170 159 A describes a sleeper timer for the source equipment of audio/-visual apparatuses such as a cassette tape deck, CD player, AM/FM tuner, and video disk play incorporates an auto sleep mode where the source equipment are turned off as soon as the source equipment completes its operation, and a conventional sleep timer mode where the source equipment are turned off when a predetermined length of time of a timer expires.

U.S. Patent Application US 2006/067188 A1 describes a data recording/reproducing system having a sleep state. When a predetermined period of a non-operation state has elapsed, a key controller switches the state of a power source circuit to shift to the sleep state. In this state, when a signal is input from the video input terminal, the key controller controls the power source circuit to turn ON, thereby causing the system to shift to the normal state.

U.S. Patent Application US 2012/183270 A1 describes a system and computer-implemented method for determining whether a user of a computer system is a human or a computer program that includes determining whether a camera device is connected with the computer system, requesting the user to perform an action and reviewing the recorded image and validating whether the requested action has been performed by the user, based on one or more of a determined level of confidence that the user is a human, and any detected error in the recorded image.

U.S. Patent 6 583 947 B1 describes a disk array unit connected to a host unit to give information thereto and receive information therefrom. The disk unit includes a plurality of disk units for storing information transmitted from the host unit and a management information recording device, formed by utilizing information storage areas in the disk units, for causing information relating to a logical unit for storing information from the host unit to correspond to information relating to the units. The invention further includes a control unit, when there is no access from the host unit to the logical unit for a predetermined time, for determining the disk units corresponding to the logical unit based on information recorded in the management information recording device and performing power saving of power supply for the disk units.

The present disclosure is made in view of the above-described problem and one of objects thereof is to provide a storage device, a content reproduction system, an operation control method in a storage device, and a program that comply with the ErP directive and allow prevention of stop of operation in operation of transmitting content data.

SUMMARY OF THE DISCLOSURE

The present disclosure is applied to a storage device, preferably including a storage section in which content data is stored, and including an input section arranged to accept a transmission instruction, and a transmitting section arranged to transmit content data in units of individual content data on the basis of the transmission instruction accepted by the input section, wherein between transmission of units of individual content data, a time period in which content data is not being transmitted is generated, the individual content data having a predefined reproduction time. Furthermore, the storage device comprises a timer unit arranged to count a count time from arbitrary timing after start of operation of the storage device, and an operation controller arranged to carry out control to stop the operation of the storage device if detecting that neither the input section nor the transmitting section is operating after the counting of the count time by the timer unit, wherein said control comprises execution of shutdown processing of the storage device after a certain time in which the storage device has not been used. The storage device comprises a reproduction time detector arranged to obtain the predefined reproduction time of individual content data from a header part of the individual content data or by accessing a database, wherein the operation controller is adapted to set the predefined reproduction time obtained by the reproduction time detector of the individual content data transmitted by the transmitting section as the count time if the transmitting section transmits the individual content data, so that execution of shutdown processing of the storage device in distribution of the content data is prevented. This configuration solves at least one of the above-described problems.

According to further aspects of the present disclosure, there is provided an operation control method for a device, in particular a storage device, as defined in claim 9 and a computer program as defined in claim 10 that causes the computer to perform said operation control method. In other words, there is provided a program product that, when executed by a computer including a storage section arranged to store content data, an input section arranged to accept a transmission instruction of the content data stored in the storage section, and a transmitting section arranged to transmit the content data on the basis of the transmission instruction accepted by the input section, the content data having a predefined reproduction time, causes the computer to function as a configuration comprising: a timer unit arranged to count a count time from arbitrary timing after start of operation of the computer; a reproduction time detector arranged to obtain the reproduction time of the content data from a header part of the content data or by accessing a database; and an operation controller arranged to carry out control to stop the operation of the computer if detecting that neither the input section nor the transmitting section is operating after the counting of the count time by the timer unit, wherein the operation controller is adapted to set out the reproduction time obtained by the reproduction time detector about the content data transmitted by the transmitting section as the count time if the transmitting section transmits the content data.

It is to be understood that both the foregoing general description and the following detailed description are exemplary, and are intended to provide further explanation of the disclosure as claimed. Other advantages and features of the disclosure will be apparent from the following description, drawings and claims.

BRIEF DESCRIPTION OF DRAWINGS

FIG. 1 is a block diagram showing the schematic configuration of a content reproduction system of a first embodiment of the present disclosure;

FIG. 2 is a block diagram showing the schematic configuration of a storage device configuring the content reproduction system of the first embodiment;

FIG. 3 is a block diagram showing the schematic configuration of a reproducing device configuring the content reproduction system of the first embodiment;

FIG. 4 is a functional block diagram showing the functional configuration of the content reproduction system of the first embodiment;

FIG. 5 is a functional block diagram showing the functional configuration of a DMS section of the first embodiment;

FIG. 6 is a diagram showing data stored in a storage section of the first embodiment;

FIG. 7 is a functional block diagram showing the functional configuration of a DMP section of the first embodiment;

FIG. 8 is a diagram showing the data structure of a music file stored in the storage section of the storage device of the first embodiment;

FIG. 9 is a sequence diagram for explaining one example of operation of the content reproduction system of the first embodiment;

FIG. 10 is a flowchart for explaining another example of the operation of the content reproduction system of the first embodiment;

FIG. 11 is a flowchart for explaining this another example of the operation of the content reproduction system of the first embodiment;

FIG. 12 is a diagram for explaining operation of a virtual storage device designed in terms of the ErP directive;

FIG. 13 is a diagram for explaining the operation of the content reproduction system of the first embodiment;

FIG. 14 is a functional block diagram showing the functional configuration of a content reproduction system of a second embodiment of the present disclosure;

FIG. 15 is a block diagram showing the schematic configuration of a content reproduction system of a third embodiment of the present disclosure;

FIG. 16 is a functional block diagram showing the functional configuration of the content reproduction system of the third embodiment;

FIG. 17 is a flowchart for explaining one example of operation of the content reproduction system of the third embodiment;

FIG. 18 is a flowchart for explaining this one example of the operation of the content reproduction system of the third embodiment; and

FIG. 19 is a diagram for explaining the operation of the content reproduction system of the third embodiment.

## DETAILED DESCRIPTION OF THE DISCLOSURE

Storage devices according to embodiments of the present disclosure will be described below with reference to the drawings.

(First Embodiment)

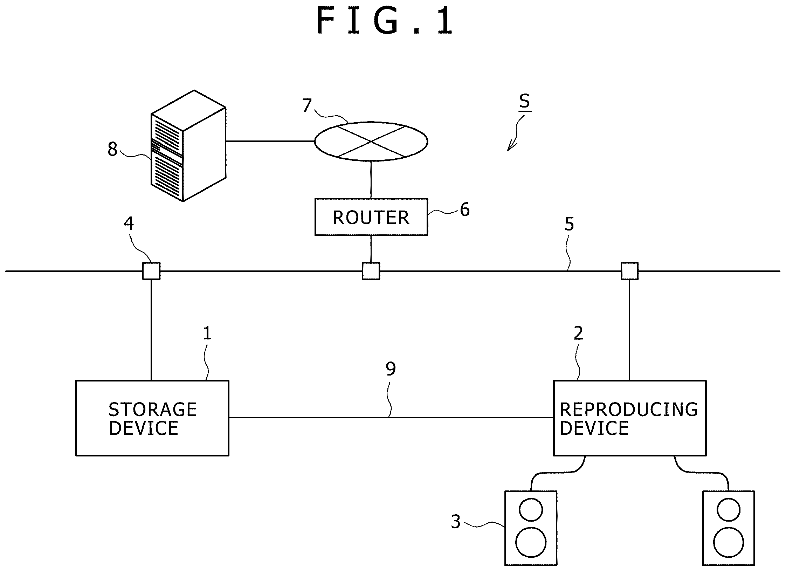

FIG. 1 is a diagram showing the schematic configuration of a content reproduction system of a first embodiment of the present disclosure. In FIG. 1, a content reproduction system S of the first embodiment includes a storage device 1 and a reproducing device 2.

As described in detail later, the storage device 1 includes a storage section in which content data is stored, an input section that accepts a transmission instruction of the content data stored in the storage section, and a transmitting section that transmits the content data on the basis of the transmission instruction accepted by the input section. The storage device 1 is e.g. a network attached storage (NAS) or a personal computer (PC). Details of the storage device 1 will be described later.

The following description will be made by taking music data as an example of content data. However, the content data stored in the storage devices of the present disclosure is not limited to music data and may be moving image data or still image data. Furthermore, in the present disclosure, the content data is stored in the storage section as a content file together with other data as described later. Therefore, the content data and the content file will be described as synonyms except for the case of particularly differentiating them.

The reproducing device 2 is e.g. a network audio player and is connected to an audio output device 3 such as a speaker. The reproducing device 2 transmits a music reproduction signal to the audio output device 3 and reproduces content data through this audio output device 3. Details of this reproducing device 2 will also be described later.

These storage device 1 and reproducing device 2 are each connected to a local area network (LAN) 5 via relay equipment 4 such as a switching hub. The LAN 5 is connected to a wide area network (WAN) 7 such as the Internet via a router 6. In addition, the storage device 1 and the reproducing device 2 are directly connected to each other via a LAN cable 9. This enables data transmission and reception between the storage device 1 and the reproducing device 2, and also allows each of the storage device 1 and the reproducing device 2 to carry out data transmission and reception with an external server 8 existing on the WAN 7.

(Configuration of Storage Device of First Embodiment)

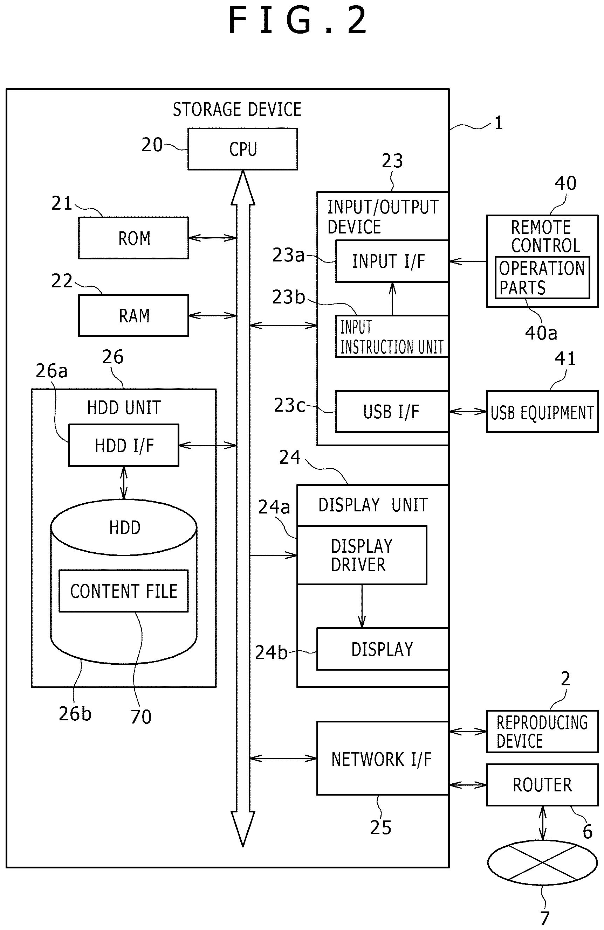

FIG. 2 is a block diagram showing the schematic configuration of the storage device 1 configuring the content reproduction system of the first embodiment of the present disclosure. In FIG. 2, the storage device 1 of the present embodiment includes a central processing unit (CPU) 20, a read only memory (ROM) 21, a random access memory (RAM) 22, an input/output device 23, a display unit 24, a network interface (I/F) 25, and a hard disk drive (HDD) unit 26 and these units are connected to each other by a bus.

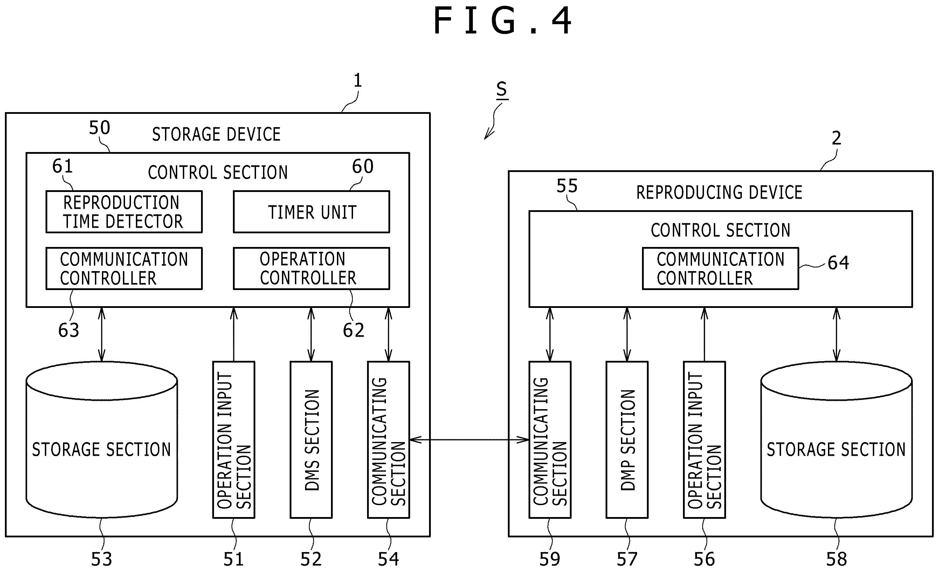

The CPU 20 controls the whole of the storage device 1 by executing programs such as firmware stored in the ROM 21 to be described later. Furthermore, the CPU 20 also operates as the respective functional sections like ones shown in FIG. 4 by executing the programs stored in the ROM 21. The operation of the respective functional sections shown in FIG. 4 will be described later. In the ROM 21, the above-described programs such as firmware are stored. The RAM 22 functions as a work memory of the storage device 1 and a program, data, and so forth temporarily used at the time of operation of the storage device 1 including the CPU 20 are stored therein. The program executed by this CPU 20 may be provided as a program product stored in a computer-readable, non-temporary recording medium or may be provided as a program product distributed via a network to be installed into this storage device 1.

The input/output device 23 includes an input I/F 23a, an input instruction unit 23b, and a universal serial bus (USB) I/F 23c.

To the input interface 23a, the input instruction unit 23b and a remote control 40 are connected. The input interface 23a receives an input signal input through operation of the input instruction unit 23b or the remote control 40 by a user. If the storage device 1 is a NAS for example, various kinds of buttons and so forth for making instructions such as an instruction to take in a file, an instruction to remove external equipment, an instruction to display the operating state, and an instruction to reset the main unit are available as the input instruction unit 23b. The remote control 40 includes operation parts 40a such as plural buttons corresponding to operation positions operated by the user. When at least one operation part 40a is operated by the user, the remote control 40 outputs an input signal corresponding to the operated operation part 40a.

The USB interface 23c has a USB connector (not shown) and performs data reading/writing in accordance with the USB 2.0 or USB 3.0 standard from/to USB equipment 41 connected to this USB connector directly or via a USB cable. Examples of the USB equipment 41 include a USB flash memory and a HDD device and a keyboard having a USB interface.

The display unit 24 includes a display 24b and a display driver 24a that drives this display 24b. The display 24b is e.g. a liquid crystal display or an organic electroluminescence display and a display surface thereof is so provided as to be exposed in the surface of the storage device 1. When data to be displayed on the display surface of the display 24b is supplied from the CPU 20 to this display driver 24a, the display driver 24a drives this display 24b to make desired displaying on the display surface of the display 24b.

The network interface 25 has plural input/output ports and network connectors in a number corresponding to the number of input/output ports (neither is shown). The reproducing device 2 is connected to any of these network connectors via a network cable (not shown) . This allows data transmission and reception between the storage device 1 and the reproducing device 2 via the network interface 25. To another network connector, the router 6 is connected via a network cable (not shown) . By the connection of this router 6 to the WAN 7, data are transmitted and received between an external network and the storage device 1. This network interface 25 is to carry out wired communications based on the institute of electrical and electronics engineers (IEEE) 802.3 standard for example. However, there is no limit to the number of input/output ports included in the network interface 25 and the number of input/output ports may be only one. In this case, data are transmitted and received between the storage device 1 and the reproducing device 2 via the LAN 5 shown in FIG. 1.

The HDD unit 26 includes an HDD 26b and an HDD I/F 26a. The HDD 26b includes a disk as a recording medium, a rotating part that rotates this disk, and a head part that performs data reading/writing from/to the disk (none is shown). When a command to read/write data from/to this HDD 26b is made, the HDD interface 26a controls the whole of the HDD 26b and carries out data reading/writing control to output read data. Furthermore, a content file 70 is stored in this HDD 26b. The detailed configuration of the content file 70 will be described later. Although only one content file 70 is shown in FIG. 2, plural content files 70 may be stored in the HDD 26b in the present embodiment.

(Configuration of Reproducing Device of First Embodiment)

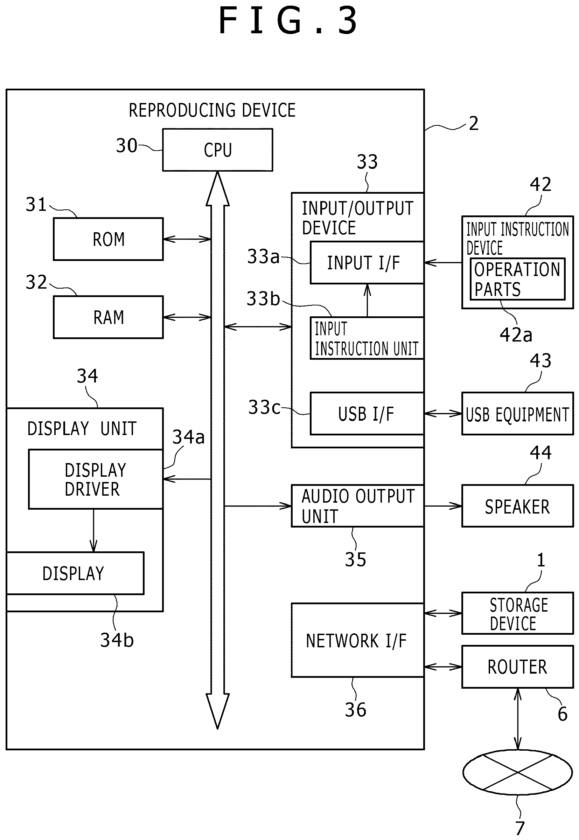

FIG. 3 is a block diagram showing the schematic configuration of the reproducing device 2 configuring the content reproduction system of the first embodiment of the present disclosure. In FIG. 3, the reproducing device 2 of the present embodiment includes a CPU 30, a ROM 31, a RAM 32, an input/output device 33, a display unit 34, an audio output unit 35, and a network I/F 36 and these units are connected to each other by a bus.

The CPU 30 controls the whole of the reproducing device 2 by executing programs such as firmware stored in the ROM 31 to be described later. Furthermore, the CPU 30 also operates as the respective functional sections like ones shown in FIG. 4 by executing the programs stored in the ROM 31. The operation of the respective functional sections shown in FIG. 4 will be described later. In the ROM 31, the above-described programs such as firmware are stored. The RAM 32 functions as a work memory of the reproducing device 2 and a program, data, and so forth temporarily used at the time of operation of the reproducing device 2 including the CPU 30 are stored therein. Moreover, the content file 70 transmitted from the storage device 1 is stored therein.

The input/output device 33 includes an input I/F 33a, an input instruction unit 33b, and a USB I/F 33c.

To the input interface 33a, the input instruction unit 33b and an input instruction device 42 are connected. The input interface 33a receives an input signal input through operation of the input instruction unit 33b or the input instruction device 42 by the user. If the reproducing device 2 is a network audio player for example, various kinds of buttons and so forth to make an instruction to display a list of the content files 70, an instruction to reproduce the content file 70, and so forth are available as the input instruction unit 33b. The input instruction device 42 includes plural operation parts 42a corresponding to operation positions operated by the user. When at least one operation part 42a is operated by the user, the input instruction device 42 outputs an input signal corresponding to the operated operation part 42a. As the input instruction device 42, e.g. a remote control, a keyboard, and a mouse are available. As the operation parts 42a, buttons and so forth provided in these devices such as the remote control and so forth are available.

The USB interface 33c has a USB connector (not shown) and performs data reading/writing in accordance with the USB 2.0 or USB 3.0 standard from/to USB equipment 43 connected to this USB connector directly or via a USB cable. As the USB equipment 43, a USB flash memory, a HDD device having a USB interface, and so forth are available.

The display unit 34 includes a display 34b and a display driver 34a that drives this display 34b. The display 34b is e.g. a liquid crystal display or an organic electroluminescence display and a display surface thereof is so provided as to be exposed in the surface of the reproducing device 2. When data to be displayed on the display surface of the display 34b is supplied from the CPU 30 to this display driver 34a, the display driver 34a drives this display 34b to make desired displaying on the display surface of the display 34b.

A speaker 44 is connected to the audio output unit 35. When content data of a predetermined format is input to this audio output unit 35, the audio output unit 35 outputs a music reproduction signal to the speaker 44 on the basis of this content data and reproduces the content data through this speaker 44.

The network interface 36 has plural input/output ports and network connectors in a number corresponding to the number of input/output ports (neither is shown). The storage device 1 is connected to one of the network connectors via a network cable (not shown) . This allows data transmission and reception between the reproducing device 2 and the storage device 1 via the network interface 36. To another of the network connectors, the router 6 is connected via a network cable (not shown) . By the connection of this router 6 to the WAN 7, data are transmitted and received between an external network and the reproducing device 2. This network interface 36 is to carry out wired communications based on the IEEE 802.3 standard for example. However, there is no limit to the number of input/output ports included in the network interface 36 and the number of input/output ports may be only one. In this case, data are transmitted and received between the storage device 1 and the reproducing device 2 via the LAN 5 shown in FIG. 1.

(Functional Configuration of Content Reproduction System of First Embodiment)

FIG. 4 is a functional block diagram showing the functional configuration of the content reproduction system S of the first embodiment. In FIG. 4, the storage device 1 configuring the content reproduction system S of the present embodiment includes a control section 50, an operation input section 51, a digital media server (DMS) section 52, a storage section 53, and a communicating section 54. Furthermore, the reproducing device 2 configuring the content reproduction system S of the present embodiment includes a control section 55, an operation input section 56, a digital media player (DMP) section 57, a storage section 58, and a communicating section 59. The communicating sections 54 and 59 in the storage device 1 and the reproducing device 2 are connected to each other via the LAN cable 9.

The outline of the DMS section 52 and the DMP section 57 will be described here. In guidelines of the digital living network alliance (DLNA: registered trademark), which is a standard in constructing a home network by using AV equipment, PC, mobile equipment, and so forth, pieces of content of photograph, music, video, etc. are stored in a DMS. Furthermore, a content list is managed with a structure having a folder hierarchy, called the content directory (content directory service: CDS). Content included in the CDS is given an ID value for uniquely identifying each piece of content, metadata as detailed information of this content, and a uniform resource locator (URL) indicating the acquisition site of the content data. This CDS is disclosed to other pieces of equipment on the network. Client equipment that reproduces content selects content by using the CDS on the DMS and acquires content data identified by the URL from the DMS to perform reproduction. As the protocol used for the communications between the DMS and the client equipment, the hypertext transfer protocol (HTTP) is used.

Furthermore, in the DLNA guidelines, a DMP as one kind of client equipment finds the DMS existing in the network and acquires CDS information, specifically a content list as one example, to display a browsing screen of the acquired CDS information. A user browses this content list and selects content desired to be reproduced. The DMP requests the DMS to allow reproduction output of this content selected by the user and reproduces content data transmitted from the DMS.

The control section 50 controls the whole of the storage device 1. This control section 50 has a function to make the storage device 1 operate as a file server of Windows (registered trademark) and a function to make the storage device 1 operate as a DLNA server. Examples of the method for making the storage device 1 operate as a Windows file server include a method in which Samba is operated on this control section 50. This control section 50 includes a timer unit 60, a reproduction time detector 61, an operation controller 62, and a communication controller 63.

The timer unit 60 starts counting of a predetermined time from any timing after the operation start of the storage device 1 preferably on the basis of an instruction from the control section 50 itself including the operation controller 62 and so forth or on the basis of an instruction from another functional configuration section such as the DMS section 52 configuring the storage device 1. Furthermore, when ending the counting of the predetermined time, this timer unit 60 notifies the end of the counting. This predetermined time is allowed to be set by the control section 50 and so forth.

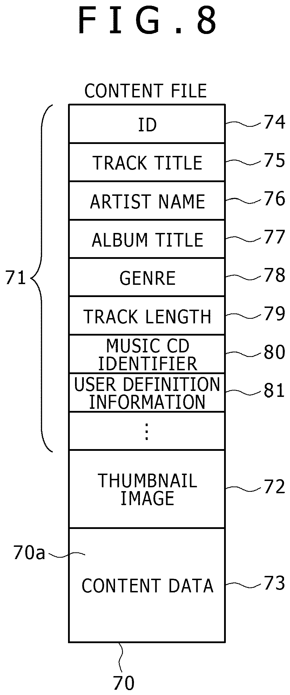

The reproduction time detector 61 detects the reproduction time of the content file 70. Specifically, when the storage device 1 accepts an instruction to transmit the content file 70 from an external device including the reproducing device 2, the reproduction time detector 61 detects the reproduction time of the content file 70 about which the transmission instruction is received. If tag information relating to the track length is stored in a track length area 79 of a header part 71 of the content file 70 to be described later (see FIG. 8), the reproduction time detector 61 obtains the reproduction time of the content file 70 from this tag information relating to the track length. If the track length area 79 does not exist in the header part 71 or the tag information relating to the track length is not stored in the track length area 79, the reproduction time detector 61 accesses a compact disc data base (CDDB) like Gracenote (registered trademark) via the communicating section 54 and obtains information relating to the reproduction time from this CDDB.

The operation controller 62 carries out control to stop the operation of the storage device 1 when detecting that the DMS section 52 functioning as the input section and the transmitting section is carrying out neither operation of accepting an instruction to transmit the content file 70 nor operation of transmitting the content file 70 after the counting of the predetermined time by the timer unit 60. Furthermore, if the DMS section 52 transmits the content file 70, the operation controller 62 sets the reproduction time detected by the reproduction time detector 61 about the content file 70 transmitted by the DMS section 52 as the predetermined time. Preferably, if the DMS section 52 transmits the content file 70, the operation controller 62 extends the predetermined time by the reproduction time detected by the reproduction time detector 61 about the content file 70 transmitted by the DMS section 52.

Specifically, when the storage device 1 carries out at least one of the operation of accepting an instruction to transmit the content file 70 and the transmission operation, the operation controller 62 instructs the timer unit 60 to start the counting of the predetermined time. Then, when a notification indicating that this counting of the predetermined time has ended is sent from the timer unit 60, the operation controller 62 detects whether the DMS section 52 functioning as the input section and the transmitting section is carrying out the operation of accepting an instruction to transmit the content file 70 and the operation of transmitting the content file 70. As a result, if detecting that the DMS section 52 is carrying out neither the operation of accepting an instruction to transmit the content file 70 nor the operation of transmitting the content file 70, the operation controller 62 carries out control to stop the operation of the storage device 1. Furthermore, if the DMS section 52 functioning as the transmitting section transmits the content file 70, on the basis of the reproduction time detected by the reproduction time detector 61 about the content file 70 transmitted by the DMS section 52, the operation controller 62 commands the timer unit 60 to extend the predetermined time by at least this reproduction time. As a result, the predetermined time counted by the timer unit 60 is extended by at least the reproduction time.

The operation controller 62 sets the reproduction time detected by the reproduction time detector 61 as the predetermined time, and preferably extends the predetermined time by at least the reproduction time detected by the reproduction time detector 61. In other words, if the DMS section 52 transmits the content file 70, the operation controller 62 may reset the time counted by the timer unit 60 at that point in each case and set the predetermined time to the reproduction time. Moreover, the operation controller 62 may set the predetermined time to a time longer than the reproduction time. As one example, if, in the middle of transmitting the certain content file 70, the transmission of the content file 70 being currently transmitted is ceased and another content file 70 is transmitted, the time counted by the timer unit 60 at that point may be reset and the predetermined time may be set to the reproduction time of the other content file 70. For example, such a situation possibly occurs in a case in which, when the plural content files 70 collected as an album are being reproduced, an instruction to forward (skip) the content file 70 being currently reproduced to the content file 70 of the next track in the track order and reproduce this next content file 70 is made.

Furthermore, when the operation controller 62 extends the predetermined time by the reproduction time, it suffices that the predetermined time as the result of the instruction to extend the predetermined time by the operation controller 62 is the time obtained by adding at least the reproduction time to the time counted by the timer unit 60 at the timing when this instruction is made. Therefore, when instructing the timer unit 60 to extend the predetermined time, the operation controller 62 may issue an instruction to extend the predetermined time by a time obtained by adding a predefined additional time to the reproduction time. However, if this predefined additional time is set to a long time, the possibility that the above-described ErP directive cannot be observed is caused. Therefore, it is preferable to set this predefined additional time in terms of observance of the ErP directive.

The operation of extending the predetermined time by the operation controller 62 may be triggered by the end of transmission of the content file 70 by the DMS section 52 functioning as the transmitting section. Specifically, the operation controller 62 monitors the operation of transmitting the content file 70 by the DMS section 52 and detects that the DMS section 52 has ended the transmission of the content file 70. Upon detecting that the DMS section 52 has ended the transmission of the content file 70, the operation controller 62 deems this end of the transmission of the content file 70 as the trigger of the extension of the predetermined time and, on the basis of the reproduction time detected by the reproduction time detector 61 about the content file 70 transmitted by the DMS section 52, commands the timer unit 60 to extend the predetermined time by at least this reproduction time. In one example of the present embodiment, the operation controller 62 commands the timer unit 60 to extend the predetermined time by at least the reproduction time of the content file 70 in such a manner that the end of the transmission of this content file 70 by the DMS section 52 is the starting point of the extension of the predetermined time.

The communication controller 63 transmits data generated by the control section 50 including the operation controller 62 and so forth and the DMS section 52 to an external device including the reproducing device 2 via the communicating section 54. Furthermore, the communication controller 63 sends out data received by the communicating section 54 from the external device including the reproducing device 2 to the control section 50 including the operation controller 62 and the DMS section 52. In particular, the communication controller 63 may perform data transmission and reception between the DMS section 52 and the external device including the reproducing device 2 according to the DLNA guidelines.

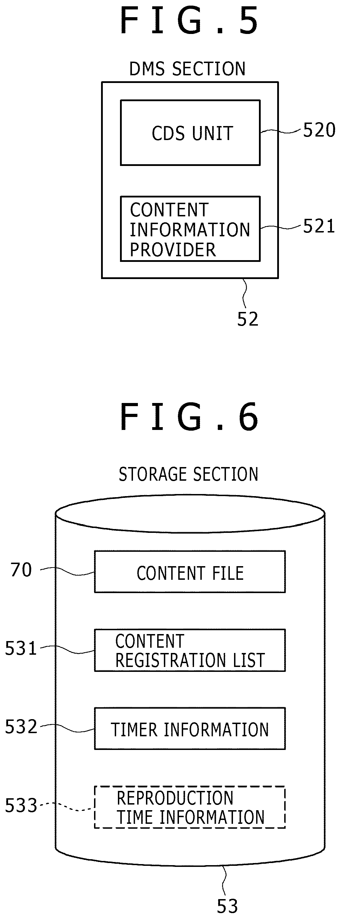

As shown in FIG. 5 in detail, the DMS section 52 includes a CDS unit 520 and a content information provider 521.

The CDS unit 520 is a content management mechanism unit that implements a CDS prescribed in "Universal Plug and Play (UPnP) Device Architecture Version 1.0" as a content management mechanism. Specifically, the CDS unit 520 registers, in a content registration list 531 of the storage section 53, the content file 70 that can be acquired via a network by any DMP (equivalent to the reproducing device 2 or the like in the present embodiment) connected to the storage device 1 via the network, and manages the content file 70 on the basis of this content registration list 531. In the content registration list 531, the file name of each content file 70 and content information of the content file 70 are described in association with each other. The content information includes e.g. information that explains the content itself and information that indicates the attribute, such as information indicating the storing place of the content (e.g. URL), a content name, and a size.

The content information provider 521 provides various kinds of attribute information and so forth registered in the content registration list 531 managed by the DMS section 52 to the reproducing device 2 or the like functioning as a DMP in response to various kinds of information acquisition requests transmitted from the reproducing device 2 or the like. Furthermore, in response to a request for acquisition of content data transmitted from the reproducing device 2 or the like functioning as a DMP, the content information provider 521 acquires content data specified by the reproducing device 2 or the like from the storage section 53 and provides it to the reproducing device 2 or the like.

The storage section 53 has a function to store various kinds of data at least temporarily. As shown in FIG. 6, in this storage section 53, the content file 70, the content registration list 531, and timer information 532 are stored. Details of the content file 70 will be described later and therefore description thereof here is omitted. Furthermore, because details of the content registration list 531 have been already explained, description thereof here is also omitted. As the timer information 532, the predetermined time to be counted by the timer unit 60, the present counted time, and so forth are temporarily stored. Furthermore, as described above, if tag information relating to the track length is not stored in the content file 70, reproduction time information 533 obtained from a CDDB by the reproduction time detector 61 is temporarily stored in the storage section 53. In FIG. 6, the content file 70 is stored in the storage section 53. However, a file other than the content file 70, specifically a document file or the like as one example, may be stored.

The operation input section 51 functioning as the input section accepts input of various kinds of data input to the storage device 1 from external input equipment including the remote control 40 to input the various kinds of input data to the control section 50 or store them in the storage section 53. The communicating section 54 transmits various kinds of data in the control section 50, the DMS section 52, and the storage section 53 to external output equipment including the reproducing device 2 via the LAN 5 and receives various kinds of data from the reproducing device 2.

When the operation input section 51 functioning as the input section accepts an operation instruction other than an instruction to transmit the content file 70, the operation controller 62 extends the predetermined time by a certain time. Specifically, when detecting that the operation input section 51 accepts an operation instruction other than an instruction to transmit the content file 70, the operation controller 62 commands the timer unit 60 to extend the predetermined time by the certain time. As a result, the predetermined time counted by the timer unit 60 is extended by the certain time.

The certain time by which the operation controller 62 carries out extension does not need to be equal to the time by which the operation controller 62 carries out extension when the storage device 1 carries out operation, and can be set as appropriate. Examples of the operation instruction that is accepted by the operation input section 51 and serves as the trigger of the extension of the predetermined time by the certain time by the operation controller 62 include an instruction to write/read the content file 70, an instruction to open a folder in the storage section 53, an instruction to make various kinds of settings of the storage device 1 in the case in which the control section 50 is operating as a Windows file server. Furthermore, the operation controller 62 may extend the predetermined time by the certain time also in a state in which a folder in the storage section 53 is opened.

On the other hand, the control section 55 of the reproducing device 2 controls the whole of the reproducing device 2. This control section 55 includes a communication controller 64. The communication controller 64 transmits data generated by the control section 55 and the DMP section 57 to an external device including the storage device 1 via the communicating section 59 and sends out data received by the communicating section 59 from the external device including the storage device 1 to the control section 55 and the DMP section 57. In particular, it is preferable for the communication controller 64 to perform data transmission and reception between the DMP section 57 and the external device including the storage device 1 according to the DLNA guidelines.

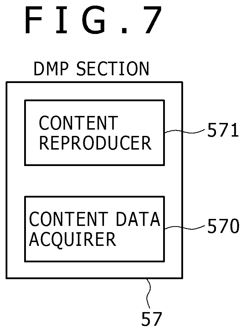

As shown in FIG. 7 in detail, the DMP section 57 includes a content data acquirer 570 and a content reproducer 571.

According to a request for acquisition of content data, input by a user through the operation input section 56, the content data acquirer 570 acquires the content data about which the request for acquisition is issued from the DMS section 52. The content reproducer 571 executes reproduction processing of the content data acquired by the content data acquirer 570. Specifically, the content reproducer 571 decodes the content data acquired by the content data acquirer 570 and executes the reproduction processing of the decoded content data. At this time, the content reproducer 571 may execute the reproduction processing of the content while decoding the content data or may execute the reproduction processing of the content after completing the decoding of the content data.

The storage section 58 has a function to store various kinds of data at least temporarily. The operation input section 56 functioning as the input section accepts input of various kinds of data input to the reproducing device 2 from external input equipment including the input instruction device 42 to input the various kinds of input data to the control section 55 or store them in the storage section 58. The communicating section 59 transmits various kinds of data in the control section 55, the DMP section 57, and the storage section 58 to external output equipment including the storage device 1 via the LAN 5 and receives various kinds of data from the storage device 1.

In the above-described configuration, the control section 50 is formed mainly of the CPU 20, and the timer unit 60, the reproduction time detector 61, the operation controller 62, and the communication controller 63 which are configuring the control section 50 are also formed mainly of the CPU 20. Furthermore, the operation input section 51 is formed mainly of the remote control 40 and the input/output device 23. Moreover, the DMS section 52 is formed mainly of the CPU 20. The storage section 53 is formed mainly of the ROM 21, the RAM 22, and the HDD unit 26 and the communicating section 54 is formed mainly of the network interface 25. Furthermore, the control section 55 is formed mainly of the CPU 30 and the operation input section 56 is formed mainly of the input/output device 33 and the input instruction device 42. The DMP section 57 is formed mainly of the CPU 30 and the storage section 58 is formed mainly of the ROM 31 and the RAM 32. Furthermore, the communicating section 59 is formed mainly of the network interface 36. The operation of the respective functional sections of the storage device 1 and the reproducing device 2 shown in FIG. 4 will be described in detail later.

(Data Structure of Content File)

FIG. 8 is a diagram showing one example of the data structure of the content file 70 stored in the HDD unit 26 of the storage device 1 of the present embodiment.

The content file 70 of the present embodiment has a file format of the mp3 (MPEG Audio Layer-3) and tag information is stored in the header part 71 thereof in accordance with a format defined based on the ID3 tag. Moreover, a thumbnail image area 72 in which thumbnail image data is stored and a content data area 73 in which content data 70a is stored are set.

In the content file 70 of the present embodiment, the tag information stored in the header part 71 is described through the following process. Specifically, at the time of creation of the content file 70, a personal computer (PC) or the like (not shown) queries a CDDB like Gracenote and stores the tag information returned from this CDDB in a predetermined area in the header part 71. Therefore, the tag information stored in the header part 71 has been already described in the predetermined area in the header part 71 of the content file 70 when the content file 70 is imported into the storage device 1.

In the header part 71 of the content file 70, the following areas are set: an ID area 74 in which an ID to uniquely manage the content file 70 in the storage device 1 is described; a track title area 75 in which the track title of the content file 70 is described; an artist name area 76 in which the name of an artist who has created the content file 70 is described; an album title area 77 in which the title of an album in which the content file 70 is included is described; a genre area 78 in which the genre to which the content file 70 belongs is described; a track length area 79 in which the track length of the content file 70 is described; a music CD identifier area 80 in which an identifier uniquely given to a music CD is described when the content file 70 is acquired from this music CD; and a user definition information area 81 for a user of the storage device 1 to arbitrarily describe various kinds of information. Naturally it is optional to set areas other than the above areas in the header part 71 of the content file 70.

(Operation of First Embodiment)

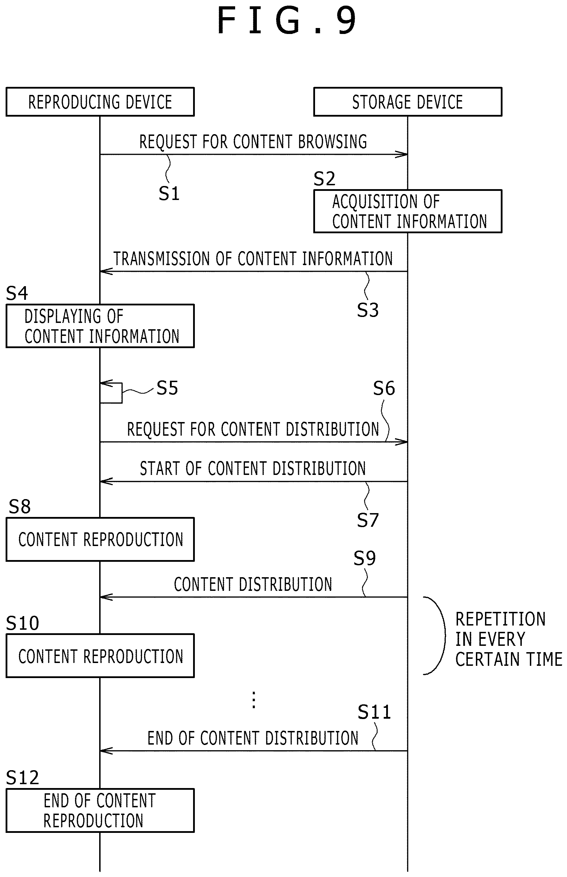

Next, with reference to flowcharts of FIGS. 9 to 11, the operation of the content reproduction system S of the present embodiment will be described.

FIG. 9 is a flowchart showing the outline of operation of reproducing the content file 70 in the content reproduction system S of the present embodiment. In a step S1 in FIG. 9, the DMP section 57 of the reproducing device 2 that operates as a DMP transmits a request for browsing of the content file 70 stored in the storage section 53 of the storage device 1 to the storage device 1 that operates as a DMS. This request for browsing of the content file 70 is carried out through issuance of "CDS:Browse" action by the DMP section 57 as one example.

In a step S2, in the storage device 1 that has received the request for browsing of the content file 70, the DMS section 52 refers to the content registration list 531 in the storage section 53 to generate and acquire CDS information. Then, in a step S3, the DMS section 52 in the storage device 1 transmits the CDS information as content information to the reproducing device 2. This content information transmission is carried out through issuance of "CDS Result" by the DMS section 52 as one example.

In a step S4, in the reproducing device 2 that has received the content information, the DMP section 57 analyzes the content information from the storage device 1 and displays the content information including a content list to a user by using e.g. the display unit 34. Then, in a step S5, the reproducing device 2 waits until the user operates the input instruction unit 33b, the input instruction device 42, or the like and thereby the operation input section 56 accepts an instruction to reproduce content from the user. Then, when the operation input section 56 accepts an instruction to reproduce content from the user, in the subsequent step S6, the DMP section 57 in the reproducing device 2 transmits a request for distribution of the content file 70 about which the reproduction instruction is made from the user. This request for distribution of the content file 70 is carried out by the DMP section 57 with use of HTTP Get method as one example.

In a step S7, the storage device 1 that has received the request for distribution of the content file 70 starts distribution of the content file 70 by transmitting, to the reproducing device 2, the content data 70a of the content file 70 about which the distribution request is issued from the reproducing device 2 in units of each certain size. In a step S8, in the reproducing device 2 that has received the content data 70a of the certain size, the DMP section 57 decodes this content data 70a and transmits an audio reproduction signal to the audio output device 3 such as the speaker 44 to reproduce the content data 70a through this audio output device 3. The size of the content data 70a distributed from the storage device 1 to the reproducing device 2 is decided as appropriate in consideration of the capacity of the storage section 58 of the reproducing device 2, particularly a cache memory and a buffer memory, and so forth.

Then, in steps S9 and S10, distribution of the content data 70a from the storage device 1 in units of each certain size and reproduction of the distributed content data 70a by the reproducing device 2 and the audio output device 3 are repeated every certain time. In a step S11, the last certain-sized unit of the content data 70a configuring the content file 70 is transmitted from the storage device 1, so that the distribution of the content file 70 is ended. In a step S12, this content data 70a is reproduced by the reproducing device 2 and the audio output device 3, so that the reproduction of the content data 70a is ended.

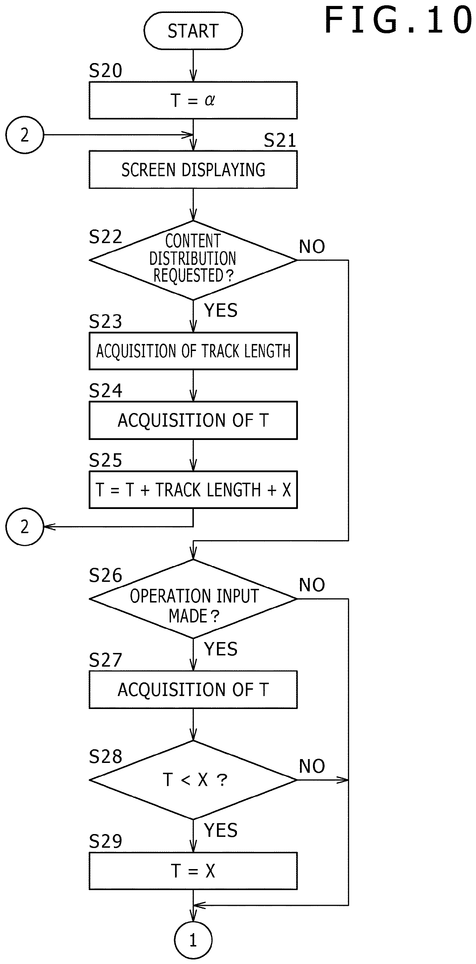

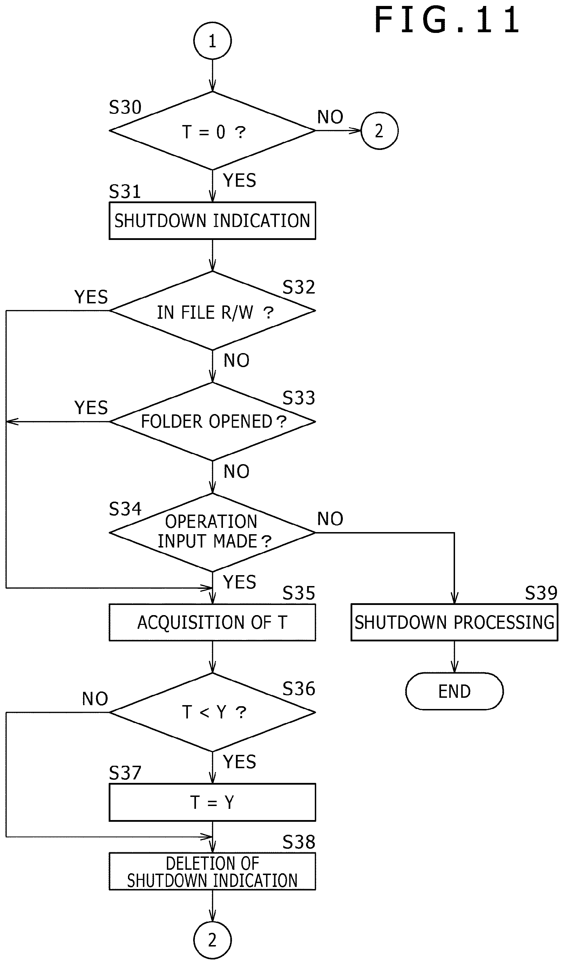

Next, FIGS. 10 and 11 are flowcharts for explaining operation control of the storage device 1 in the content reproduction system S of the present embodiment.

First, in a step S20 in FIG. 10, the operation controller 62 of the storage device 1 sets a count time T to be counted by the timer unit 60 to an initial value $\alpha$. This initial value $\alpha$ is set in terms of properly reducing the standby power while smoothly carrying out operation of the whole of the storage device 1, and is set to three minutes as one example. Subsequently, in a step S21, the control section 50 of the storage device 1 displays an indication relating to operation of the storage device 1 to a user by using e.g. the display unit 24. As one example, the displaying in the step S21 may include an indication of that the storage device 1 is in the standby state, an indication of a track title described in the track title area 75 in the content file 70 being distributed in response to a request for content distribution from the reproducing device 2, and so forth.

In a step S22, it is determined whether or not the DMS section 52 has accepted a request for distribution of the content file 70 from an external device including the reproducing device 2. If the DMS section 52 has accepted a request for distribution of the content file 70 (YES in the step S22), the program makes transition to a step S23. If the DMS section 52 has not accepted a request for distribution of the content file 70 (NO in the step S22), the program makes transition to a step S26.

In the step S23, the reproduction time detector 61 detects the reproduction time (track length) of the content file 70 about which the distribution request is accepted. Because details of the operation of detecting the reproduction time by the reproduction time detector 61 have been already described, more description thereof here is omitted. In a step S24, the operation controller 62 acquires the count time T currently counted by the timer unit 60 from this timer unit 60.

In a step S25, the operation controller 62 adds the track length detected by the reproduction time detector 61 in the step S23 and an additional time X set in advance to the count time T acquired in the step S24 to thereby extend this count time by a predetermined time. It is preferable that the operation of extending the count time by the predetermined time in the step S25 is carried out after the end of distribution of one content file 70. This prevents execution of shutdown processing or the like of the storage device 1 in distribution of the content file 70. Thus, the distribution processing can be executed more surely and transition to operation stop can be made more properly. Furthermore, this additional time X is set in terms of properly reducing the standby power while smoothly carrying out operation of the whole of the storage device 1 as with the above-described initial value α, and is set to three minutes as one example. Thereafter, the program returns to the step S21.

In the step S26, it is determined whether or not the operation input section 51 has accepted an operation instruction input from the user. If the operation input section 51 has accepted an operation instruction input from the user (YES in the step S26), the program makes transition to a step S27. If the operation input section 51 has not accepted an operation instruction input from the user (NO in the step S26), the program makes transition to a step S30.

In the step S27, the operation controller 62 acquires the count time T currently counted by the timer unit 60 from this timer unit 60. In a step S28, it is determined whether or not the count time T acquired in the step S27 is shorter than the additional time X. If the acquired count time T is shorter than the additional time X (YES in the step S28), the program makes transition to a step S29. If the acquired count time T is equal to or longer than the additional time X (NO in the step S28), the program makes transition to the step S30. In the step S29, the operation controller 62 sets the count time T to the additional time X to thereby extend this count time by a predetermined time.

In the step S30, the count time T currently counted by the timer unit 60 is acquired by the operation controller 62 and it is determined whether or not the acquired count time T is zero. Then, if the acquired count time T is zero (YES in the step S30), the program makes transition to a step S31. If the acquired count time T is not zero (NO in the step S30), the program returns to the step S21. From then on, the operation from the step S21 to the step S30 is repeated.

In the step S31, the control section 50 of the storage device 1 displays, to the user, an indication of that operation stop (shutdown) of the storage device 1 is to be carried out by using e.g. the display unit 24.

In a step S32, it is detected whether or not the content file 70 stored in the storage section 53 is being written or read out by an external device as the result of acceptance of an operation instruction input from the user by the operation controller 62. If the content file 70 is being written or read out (YES in the step S32), the program makes transition to a step S35. On the other hand, if the content file 70 is being neither written nor read out (NO in the step S32), the program makes transition to a step S33.

In the step S33, it is detected whether or not a folder in which the content file 70 is stored is currently opened by an external device as the result of acceptance of an operation instruction input from the user by the operation controller 62. If the folder is currently opened (YES in the step S33), the program makes transition to the step S35. On the other hand, if the folder is not currently opened (NO in the step S33), the program makes transition to a step S34. The determination as to whether or not the folder is currently opened in the step S33 may be carried out on the basis of whether or not smbstatus is in the locked state (if it is in the locked state, the folder is currently opened) if Samba is currently activated in the storage device 1 for example.

In the step S34, it is determined whether or not the operation input section 51 has accepted an operation instruction input from the user. If the operation input section 51 has accepted an operation instruction input from the user (YES in the step S34), the program makes transition to the step S35. If the operation input section 51 has not accepted an operation instruction input from the user (NO in the step S34), the program makes transition to a step S39.

In the step S35, the operation controller 62 acquires the count time T currently counted by the timer unit 60 from this timer unit 60. In a step S36, it is determined whether or not the count time T acquired in the step S35 is shorter than an additional time Y. If the acquired count time T is shorter than the additional time Y (YES in the step S36), the program makes transition to a step S37. If the acquired count time T is equal to or longer than the additional time Y (NO in the step S36), the program makes transition to a step S38.

In the step S37, the operation controller 62 sets the count time T to the additional time Y to thereby extend this count time by a predetermined time. This additional time Y is also set in terms of properly reducing the standby power while smoothly carrying out operation of the whole of the storage device 1, and is set to two minutes as one example. The additional time Y may be set to the same time as the additional time X. In the step S38, the shutdown indication made by the control section 50 in the step S31 is deleted. Thereafter, the program returns to the step S21.

In the step S39, the control section 50 of the storage device 1 executes operation stop (shutdown) processing of the storage device 1 and ends the processing shown in the flowcharts of FIGS. 10 and 11.

(Effects of First Embodiment)

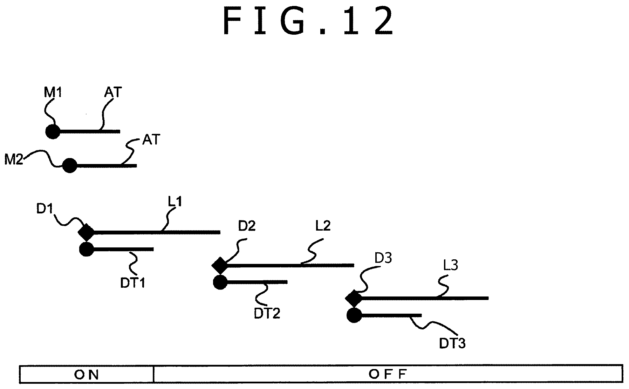

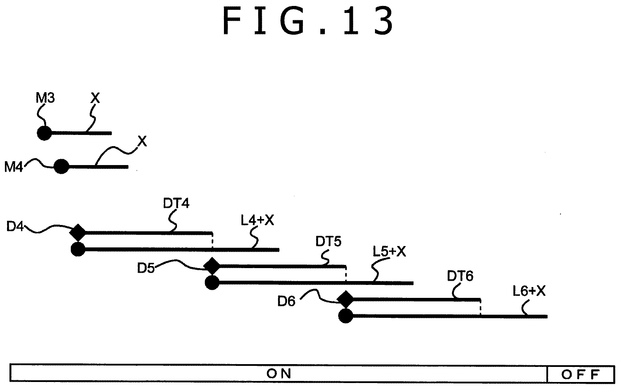

Effects of the content reproduction system S of the present embodiment will be described with reference to FIGS. 12 and 13.

FIG. 12 is a diagram for explaining the operation of a virtual storage device designed in consideration of the ErP directive. In the storage device shown in FIG. 12, control to cause a shutdown (operation stop) of the storage device if it is determined that the storage device is not operating is carried out.

As one example, when accepting predetermined operation instruction inputs M1 and M2 through operation of an operation input section by a user, the storage device carries out control to shut down the storage device itself at the elapse of operation times AT based on the operation instruction inputs M1 and M2. Furthermore, when accepting instructions D1 to D3 to distribute content files on the basis of operation instructions from the user, the storage device carries out control to shut down the storage device itself at the elapse of distribution times DT1 to DT3 of the content files.

However, as shown in FIG. 12, if reproduction times (track lengths) L1 to L3 of the content files are longer than the distribution times DT1 to DT3, the storage device carries out shutdown operation upon ending the distribution of the content file on the basis of the distribution instruction D1. Therefore, although the instructions D2 and D3 to distribute the content files are made, the possibility that operation of distributing the content file cannot be immediately carried out in response to the distribution instructions D2 and D3 is high because the storage device has been shut down. Because the reproduction times L1 to L3 of the content files and the distribution times DT1 to DT3 can variously differ, the occurrence of a situation in which the reproduction times L1 to L3 of the content files are longer than the distribution times DT1 to DT3 is sufficiently possible.

FIG. 13 is a diagram for explaining operation of the storage device 1 in the content reproduction system S of the present embodiment.

When receiving predetermined operation instruction inputs M3 and M4, the storage device 1 of the present embodiment carries out operation of extending the count time T of the timer unit 60 by the additional time X (or the additional time Y) at the timing when the operation instruction inputs M3 and M4 are accepted (see the steps S29 and S37). Furthermore, when accepting instructions D4 to D6 to distribute the content files 70 on the basis of distribution requests from the reproducing device 2, the storage device 1 carries out operation of adding the track lengths L4 to L6 detected by the reproduction time detector 61 and the additional time X set in advance to the count time T of the timer unit 60 to thereby extend this count time by a predetermined time at the timings of the elapse of distribution times DT4 to DT6 of the content files 70, i.e. at the timings of the end of distribution of the content files 70 (see the step S25).

In this manner, when a request for distribution of the content file 70 is made, the count time of the timer unit 60 is extended by the track length + the additional time X at the timing of the end of distribution of this content file 70. Due to this, execution of shutdown processing by the storage device 1 itself is avoided at least while the content file 70 is being reproduced in the reproducing device 2. This allows compliance with the ErP directive and prevention of stop of operation in operation of transmitting content data.

(Second Embodiment)

In the above-described first embodiment, the storage device 1 includes the storage section 53 and the content file 70 is stored in this storage section 53. However, the storage device 1 does not need to store the content file 70 inside and the present disclosure can be implemented also when an external storage device as a separate device from the storage device 1 is provided and the storage device 1 accepts at least part of the content file 70 from this external storage device.

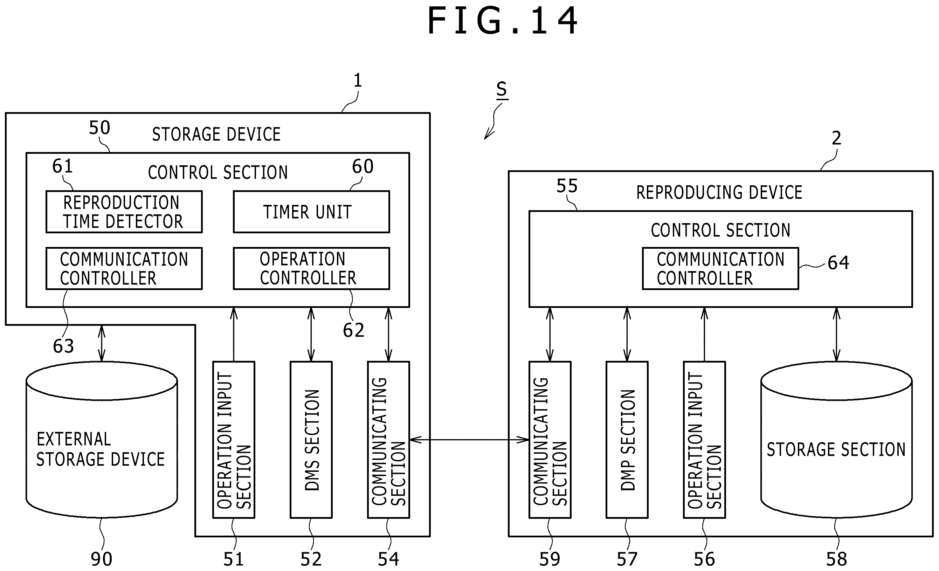

FIG. 14 is a functional block diagram showing the functional configuration of a content reproduction system S of a second embodiment of the present disclosure.

In FIG. 14, an external storage device 90 is connected to the storage device 1 of the present embodiment and the same content file 70 as that in the first embodiment is stored in this external storage device 90. The external storage device 90 is e.g. an external HDD device, a USB flash memory device, or a memory card. There is no particular limit to the form of the connection between the storage device 1 and the external storage device 90 as long as the form allows transmission and reception of at least part of the content file 70. For example, it is possible to employ a well-known connection form such as a form in which they are connected via a cable or a form in which they are connected via radio waves, such as a wireless LAN. Here, the at least part of the content file 70 is e.g. at least part of the content data 70a and the tag data described in the header part 71.

The storage device 1 of the present embodiment has the same functional configuration as that of the storage device 1 of the above-described first embodiment except for that the storage section 53 is omitted. Furthermore, the reproducing device 2 of the present embodiment also has the same functional configuration as that of the reproducing device 2 of the above-described first embodiment. Therefore, in the following description, a constituent element similar to that in the above-described first embodiment is given the same numeral and description thereof is simplified.

Also by the present embodiment, effects similar to those by the above-described first embodiment can be achieved. Furthermore, according to the present embodiment, the storage device 1 and the external storage device 90 can be provided as separate devices and it is also possible that the external storage device 90 is formed of the external server 8 (see FIG. 1) existing on the WAN 7 for example. Thus, simplification of the configuration of the whole of the storage device 1 can be achieved.

(Third Embodiment)

In the content reproduction systems S of the above-described first and second embodiments, one storage device 1 and one reproducing device 2 are included. However, in the DLNA guidelines, the existence of plural DMPs on the same network is permitted. Therefore, in the content reproduction system S of the present disclosure, plural reproducing devices 2 operating as DMPs may be included.

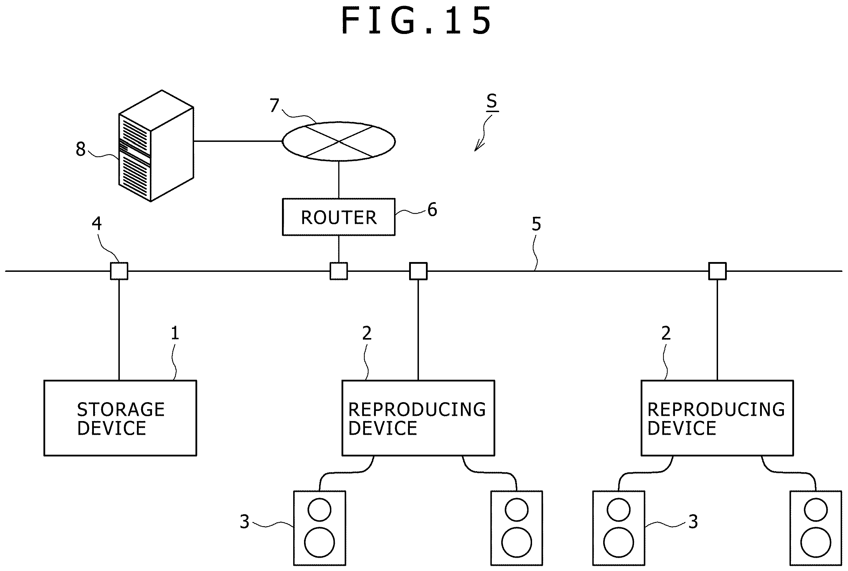

FIG. 15 is a diagram showing the schematic configuration of a content reproduction system of a third embodiment of the present disclosure. In FIG. 15, the content reproduction system S of the third embodiment includes one storage device 1, two reproducing devices 2, and two audio output devices 3. Although the two reproducing devices 2 are included in the present embodiment, there is no limit to the number of reproducing devices 2 in the present embodiment. Furthermore, although the reproducing devices 2 and the audio output devices 3 having completely the same configuration are included in the present embodiment, plural reproducing devices 2 having different functions may be included as long as they are the reproducing devices 2 functioning as DMPs.

(Functional Configuration of Content Reproduction System of Third Embodiment)

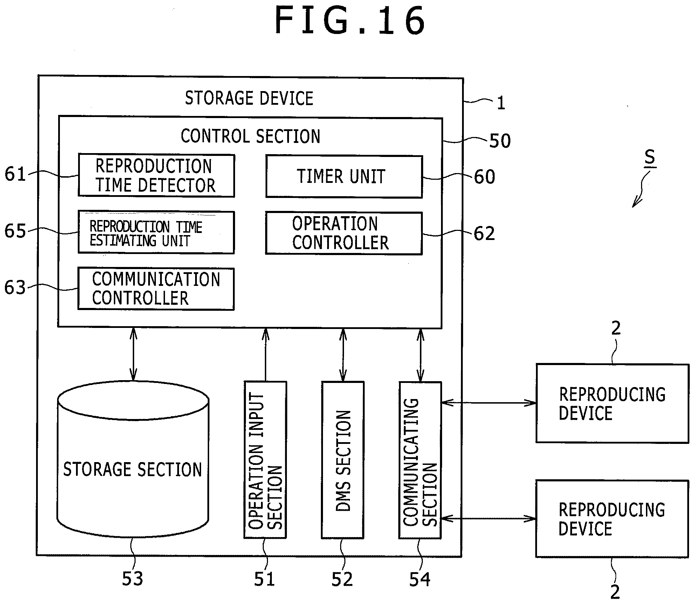

FIG. 16 is a functional block diagram showing the functional configuration of the content reproduction system S of the third embodiment. In FIG. 16, the storage device 1 configuring the content reproduction system S of the present embodiment includes the control section 50, the operation input section 51, the DMS section 52, the storage section 53, and the communicating section 54 similarly to the storage device 1 of the first embodiment. In the following description, a constituent element similar to that in the above-described first embodiment is given the same numeral and description thereof is simplified.

When compared with the control section 50 of the first embodiment, the control section 50 of the present embodiment has the same functional configuration as that of the control section 50 of the first embodiment except for that a reproduction time estimating unit 65 is included.

The reproduction time estimating unit 65 estimates the remaining time of reproduction of the content file 70 in each of the plural reproducing devices 2. Specifically, the reproduction time estimating unit 65 estimates the remaining time of reproduction of the content file 70 in each of the plural reproducing devices 2 on the basis of the reproduction time of the content file 70 detected by the reproduction time detector 61 and the time for which the content file 70 distributed by the storage device 1 is reproduced in each of the plural reproducing devices 2.

As one example, the time for which the content file 70 is reproduced in each of the plural reproducing devices 2 may be estimated by the following method. Specifically, the reproduction time estimating unit 65 instructs the timer unit 60 to perform a countdown from the reproduction time of the content file 70 detected by the reproduction time detector 61, with the starting point of the countdown being the timing at which the reproduction of the content file 70 is estimated to be started in the reproducing device 2 after distribution of the content file 70 from the storage device 1 is started. Then, when carrying out operation of estimating the remaining time of the reproduction, the reproduction time estimating unit 65 acquires the count time by this timer unit 60.

The time from the start of distribution of the content file 70 from the storage device 1 to reproduction of the content file 70 in the reproducing device 2 can variously differ depending on the communication environment between these storage device 1 and reproducing device 2, the capacity of the storage section 58 of the reproducing device 2, particularly the capacity of the storage section 58 acting as a buffer memory and a cache memory, the decoding rate of the reproducing device 2, and so forth. However, the change width of the time is considered not to be large (at most about several seconds). Therefore, it is preferable for the reproduction time estimating unit 65 to estimate the time from the start of distribution of the content file 70 from the storage device 1 to reproduction of the content file 70 in the reproducing device 2 as a uniform constant time.

Furthermore, if the DMS section 52 operating as the transmitting section is transmitting the content file 70, the operation controller 62 extends a predetermined time to the longest remaining time of reproduction among the remaining times of reproduction estimated by the reproduction time estimating unit 65.

Moreover, the reproducing devices 2 of the present embodiment also have the same functional configuration as that of the reproducing device 2 of the above-described first embodiment. Therefore, in FIG. 16, diagrammatic representation of the respective constituent elements configuring the reproducing devices 2 is omitted and description of the constituent elements is also omitted.

(Operation of Third Embodiment)

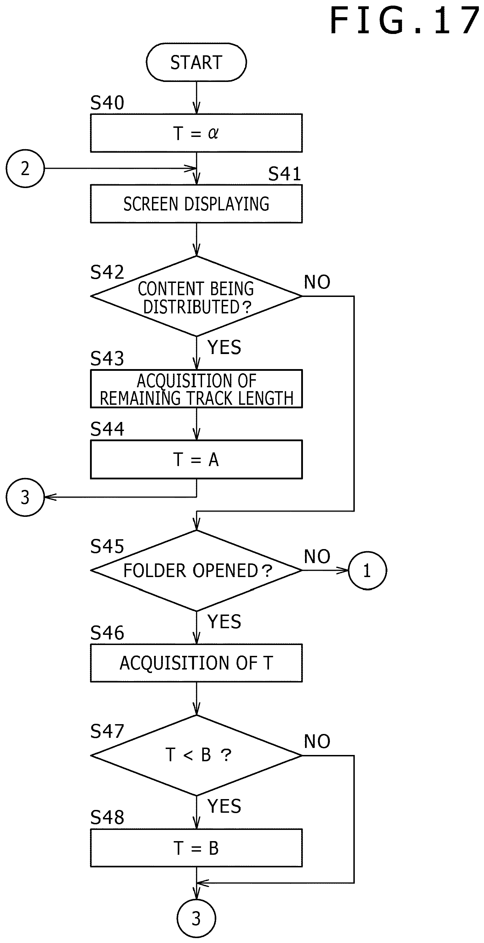

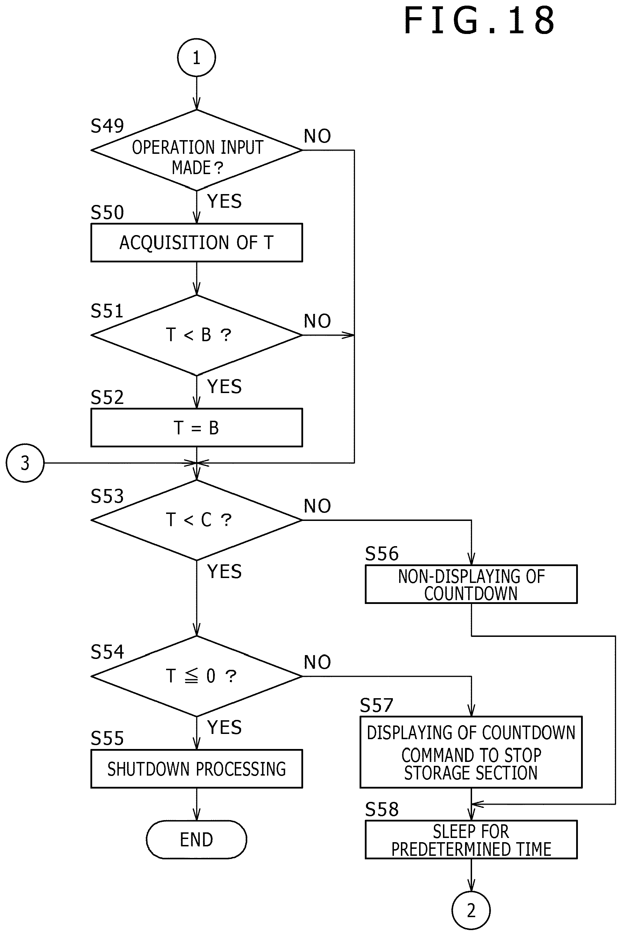

Next, with reference to flowcharts of FIGS. 17 and 18, the operation of the content reproduction system S of the present embodiment will be described. FIGS. 17 and 18 are flowcharts for explaining operation control of the storage device 1 in the content reproduction system S of the present embodiment.

First, in a step S40 in FIG. 17, the operation controller 62 of the storage device 1 sets a count time T to be counted by the timer unit 60 to an initial value $\alpha$. This initial value $\alpha$ is set to a proper value from the viewpoint described in the first embodiment. The initial value $\alpha$ may be the same value as the initial value $\alpha$ set in the step S20 in the above-described first embodiment or may be set to a different value. Subsequently, in a step S41, the control section 50 of the storage device 1 displays an indication relating to operation of the storage device 1 to a user by using e.g. the display unit 24. As one example, the displaying in the step S41 may also be an indication of that the storage device 1 is in the standby state, an indication of a track title described in the track title area 75 in the content file 70 being distributed in response to a request for content distribution from the reproducing device 2, and so forth.

In a step S42, it is determined whether or not the DMS section 52 is carrying out operation of distributing the content file 70. If the DMS section 52 is carrying out operation of distributing the content file 70 (YES in the step S42), the program makes transition to a step S43. If the DMS section 52 is not carrying out operation of distributing the content file 70 (NO in the step S42), the program makes transition to a step S45.

In the step S43, the reproduction time estimating unit 65 estimates the remaining time of reproduction of the content file 70 in each of the plural reproducing devices 2. In a step S44, the operation controller 62 sets the count time T currently counted by the timer unit 60 to a predetermined value A. This predetermined value A is calculated by the following expression.

[Expression 1]

$$A = \max(x + C + L(1), x + C + L(2), \cdots, x + C + L(k))$$

Here, the remaining time of reproduction of the i-th content file 70 being reproduced by a reproducing device p is defined as l(pi) and the total remaining time L(p) of reproduction of all of j content files 70 in the reproducing device p is defined as shown by the following expression.

[Expression 2]

$$L(p) = \sum (l(p1) + l(p2) + \cdots + l(p1) + \cdots + l(pj))$$

Moreover, x in the expression 1 is an additional extension time prescribed from a viewpoint similar to that of the additional time X of the first embodiment and is set to five minutes as one example. In addition, C in the expression 1 is a preceding displaying time. This preceding displaying time C is a time that determines how long an indication of a countdown until shutdown processing of the storage device 1 in a step S55 to be described later is displayed ahead of actual shutdown processing. The preceding displaying time C is decided in terms of allowing a user to surely visually recognize the countdown indication while starting the shutdown processing at a proper time. In the present embodiment, the preceding displaying time C is set to one minute as one example. Thereafter, the program makes transition to a step S53.

In the step S45, it is detected whether or not a folder in which the content file 70 is stored is currently opened by an external device as the result of acceptance of an operation instruction input from the user by the operation controller 62. If the folder is currently opened (YES in the step S45), the program makes transition to a step S46. If the folder is not currently opened (NO in the step S45), the program makes transition to a step S49.

In the step S46, the operation controller 62 acquires the count time T currently counted by the timer unit 60 from this timer unit 60. In a step S47, it is determined whether or not the count time T acquired in the step S46 is shorter than an additional time B. If the acquired count time T is shorter than the additional time B (YES in the step S47), the program makes transition to a step S48. If the acquired count time T is equal to or longer than the additional time B (NO in the step S47), the program makes transition to the step S53. In the step S48, the operation controller 62 sets the count time T to the additional time B to thereby extend this count time by a predetermined time. This additional time B is set from a viewpoint similar to that of the additional time Y in the above-described first embodiment and is set to six minutes as one example. Thereafter, the program makes transition to the step S53.

In the step S49, it is determined whether or not the operation input section 51 has accepted an operation instruction input from the user. If the operation input section 51 has accepted an operation instruction input from the user (YES in the step S49), the program makes transition to a step S50. If the operation input section 51 has not accepted an operation instruction input from the user (NO in the step S49), the program makes transition to the step S53.

In the step S50, the operation controller 62 acquires the count time T currently counted by the timer unit 60 from this timer unit 60. In a step S51, it is determined whether or not the count time T acquired in the step S50 is shorter than the additional time B. If the acquired count time T is shorter than the additional time B (YES in the step S51), the program makes transition to a step S52. If the acquired count time T is equal to or longer than the additional time B (NO in the step S51), the program makes transition to the step S53. In the step S52, the operation controller 62 sets the count time T to the additional time B to thereby extend this count time by a predetermined time.

In the step S53, the operation controller 62 acquires the count time T currently counted from the timer unit 60 and it is determined whether or not this count time T is shorter than the preceding displaying time C. Then, if the count time T is shorter than the preceding displaying time C (YES in the step S53), the program makes transition to a step S54. If the count time T is equal to or longer than the preceding displaying time C (NO in the step S53), the program makes transition to a step S56.

In the step S54, it is determined whether or not the count time T acquired by the operation controller 62 in the step S50 is equal to or smaller than zero. If the count time T is equal to or smaller than zero (YES in the step S54), the program makes transition to the step S55. If the count time T is larger than zero (NO in the step S54), the program makes transition to a step S57.

In the step S55, the control section 50 of the storage device 1 executes operation stop (shutdown) processing of the storage device 1 and ends the processing shown in the flowcharts of FIGS. 17 and 18.

On the other hand, in the step S56, without displaying a countdown until the shutdown processing, the control section 50 of the storage device 1 continuously displays, to the user, the indication relating to operation of the storage device 1, made in the step S41, by using e.g. the display unit 24. Thereafter, the program makes transition to a step S58.

In the step S57, the control section 50 of the storage device 1 displays a countdown until the shutdown processing to the user by using e.g. the display unit 24, and commands the storage section 53 to stop operation of at least the HDD unit 26 in this storage section 53. The countdown displaying in the step S57 may be so carried out that the starting point of the countdown is the timing at which the processing of the step S57 is executed first and the initial value of the countdown is set to the above-described preceding displaying time C.

Then, in the step S58, the control section 50 of the storage device 1 causes sleep of the operation of the control section 50 for a predetermined time, specifically e.g. three seconds. Thereafter, the program returns to the step S41.

(Effects of Third Embodiment)

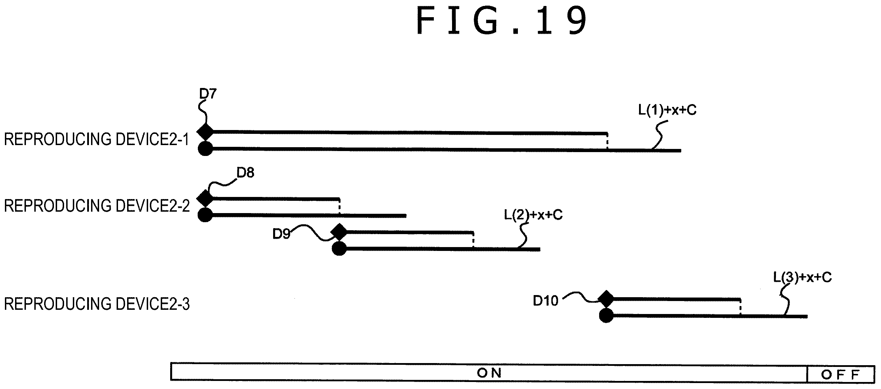

Effects of the content reproduction system S of the present embodiment will be described with reference to FIG. 19. Suppose that, in FIG. 19, the content reproduction system S includes three reproducing devices 2-1 to 2-3.

When accepting instructions D7 to D10 to distribute the content files 70 on the basis of distribution requests from the respective reproducing devices 2-1 to 2-3, the storage device 1 of the present embodiment starts distribution of the content files 70 to the respective reproducing devices 2-1 to 2-3. Then, if the operation of distributing these content files 70 is being carried out (YES in the step S42), the reproduction time estimating unit 65 of the storage device 1 estimates total remaining times L(1) to L(3) of reproduction of the content files 70 in the plural reproducing devices 2-1 to 2-3, and sets, as the count time T of the timer unit 60, the maximum value A among the values obtained by adding the additional time x and the preceding displaying time C to the total remaining times L(1) to L(3) of reproduction, i.e. the time obtained by adding the additional time x and the preceding displaying time C to the remaining time of reproduction in the reproducing device in which the reproduction of the content file 70 ends last among the reproducing devices 2-1 to 2-3 (see the step S44).

In this manner, the reproduction time estimating unit 65 estimates the remaining time of reproduction of the content file 70 in each of the plural reproducing devices 2-1 to 2-3 and the count time is extended to the longest (largest) remaining time of reproduction among the remaining times of reproduction estimated by the reproduction time estimating unit 65 + the additional time x + the preceding displaying time C. Due to this, execution of shutdown processing by the storage device 1 itself is avoided at least while the content file 70 is being reproduced in any of the reproducing devices 2-1 to 2-3. This allows compliance with the ErP directive and prevention of stop of operation in operation of transmitting content data.

(Modification Examples)

The details of the content reproduction systems S, the storage devices 1, and so forth of the present disclosure are not limited to the above-described respective embodiments and various modification examples are possible. As one example, in the above-described third embodiment, the storage device 1 includes the storage section 53 and the content file 70 is stored in this storage section 53. However, the storage device 1 does not need to store the content file 70 inside and the present disclosure can be implemented also when an external storage device as a separate device from the storage device 1 is provided and the storage device 1 accepts at least part of the content file 70 from this external storage device, as described above with respect to the second embodiment. As another example, in the above-described respective embodiments, shutdown processing of the storage device 1 is executed after a predetermined time in terms of compliance with the ErP directive. However, for example in the case of selling the storage device 1 only in Japan, the operation for power saving may be suppressed to execution of processing of setting the storage device 1 to the standby state, specifically lowering the rotation speed of the HDD unit 26 (spin-down) for example, after a predetermined time.

Furthermore, in the above-described respective embodiments, the shutdown processing of the storage device 1 is postponed also when file operation by Samba or the like is being carried out. However, if the storage device 1 operates only as a DLNA server, the timing of the shutdown processing may be set on the basis of only the distribution time of the content file 70 or the remaining time of reproduction.

Moreover, specific numerical values of various kinds of setting times in the above-described respective embodiments are absolutely one example and various values can be employed.

Furthermore, in the above-described respective embodiments, the program to operate the storage device 1 is so provided as to be stored in the ROM 21, the HDD unit 26, and so forth. However, a digital versatile disc (DVD), a USB flash memory device, a memory card, or the like in which the program is stored may be connected by using an optical disc drive (not shown), the USB interface 23c, or the like and the program may be read from this DVD or the like into the storage device 1 to operate the storage device 1. Furthermore, the program may be stored in the external server 8 on the WAN 7 in advance and this program may be read into the storage device 1 via the network interface 25 to operate the storage device 1. Moreover, although the storage device 1 is composed of plural hardware elements in the above-described respective embodiments, it is also possible that the CPU 20 implements operation of part of these hardware elements by operation of a program. In addition, although the HDD unit 26 is used in the above-described respective embodiments, it is also possible to use a storage medium other than the HDD unit 26, specifically a well-known storage medium such as a solid state drive (SSD) device or a memory card as one example.

## Claims

1.   A storage device (1) including an input section (51,52) arranged to accept a transmission instruction, and a transmitting section (52) arranged to transmit content data in units of individual content data (70) on the basis of the transmission instruction accepted by the input section (51,52), wherein between transmission of units of individual content data (70), a time period in which content data is not being transmitted is generated, the individual content data (70) having a predefined reproduction time, the storage device (1) comprising:

a timer unit (60) arranged to count a count time from arbitrary timing after start of operation of the storage device (1) ;
an operation controller (62) arranged to carry out control to stop the operation of the storage device (1) if detecting that neither the input section (51,52) nor the transmitting section (52) is operating after the counting of the count time by the timer unit (60), wherein said control comprises execution of shutdown processing of the storage device (1) after a certain time in which the storage device (1) has not been used,
**characterized in that**
the storage device (1) comprises a reproduction time detector (61) arranged to obtain the predefined reproduction time of individual content data (70) from a header part (71) of the individual content data (70) or by accessing a database;
wherein the operation controller (62) is adapted to set the predefined reproduction time obtained by the reproduction time detector (61) of the individual content data (70) transmitted by the transmitting section (52) as the count time if the transmitting section (52) transmits the individual content data (70), so that execution of shutdown processing of the storage device (1) in distribution of the content data is prevented.

2.   The storage device (1) according to claim 1, **characterized in that**
the operation controller (62) is adapted to extend the count time by at least the predefined reproduction time obtained by the reproduction time detector (61) of the individual content data (70) transmitted by the transmitting section (52) if the transmitting section (52) transmits the individual content data (70).

3.   The storage device (1) according to claim 2, **characterized in that**
it is adapted such that operation of extending the count time by the operation controller (62) is triggered by end of transmission of the individual content data (70) by the transmitting section (52).

4.   The storage device according to any of the preceding claims, **characterized by** further comprising

a reproduction time estimating unit arranged to estimate a remaining time of reproduction of the individual content data (70) in a reproducing device that is arranged to reproduce the content data transmitted by the transmitting section.

5. The storage device (1) according to claim 4, **characterized in that**
the input section (51,52) is adapted to accept the transmission instruction from a plurality of the reproducing devices (2),
the transmitting section (52) is adapted to transmit the content data to the plurality of the reproducing devices (2) from which the transmission instruction is issued,
the reproduction time estimating unit (65) is adapted to estimate the remaining time of reproduction of the individual content data (70) in each of the plurality of the reproducing devices (2), and
the operation controller (62) is adapted to extend the count time to a longest remaining time of reproduction among the remaining times of reproduction estimated by the reproduction time estimating unit (65) if the transmitting section (52) is transmitting the content data.

6. The storage device (1) according to any of the preceding claims, **characterized in that**
the input section (51,52) is adapted to accept an operation instruction to the storage device (1) other than the transmission instruction, and
the operation controller (62) is adapted to extend the count time by a certain time if the input section (51, 52) accepts the operation instruction.

7. The storage device (1) according to any one of claims 1 to 6, **characterized by** further comprising
a storage section (53) arranged to store the content data.

8. A content reproduction system (S), comprising:

a storage device (1) according to any one of claims 1 to 7; and
a reproducing device (2),
wherein
the reproducing device includes

an input instruction unit (33b) that accepts an input of a transmission instruction and transmits the transmission instruction to the storage device (1), and
a reproducing section (57) that reproduces the content data transmitted from the storage device (1) on the basis of the transmission instruction, and

wherein, in the storage device (1)

the input section (51,52) is adapted to accept the transmission instruction transmitted from the reproducing device (2), and
the transmitting section (52) is adapted to transmit the content data to the reproducing device (2) on the basis of the transmission instruction accepted by the input section (51,52).

9. An operation control method for a device including a storage section (53) arranged to store content data, an input section arranged to accept a transmission instruction stored in the storage section (53), and a transmitting section (52) arranged to transmit the content data in units of individual content data (70) on the basis of the transmission instruction accepted by the input section (51,52), wherein between transmission of units of individual content data (70), a time period in which content data is not being transmitted is generated, the individual content data (70) having a predefined reproduction time, the operation control method **characterized by** comprising:

counting (S20) a count time ($\alpha$) from arbitrary timing after start of operation of the storage device;
obtaining (S23) the predefined reproduction time of the individual content data from a header part (71) of the individual content data (70) or by accessing a database;
carrying out control (S39) to stop the operation of the storage device if detecting that neither the input section nor the transmitting section is operating after the counting of the count time, wherein said control comprises execution of shutdown processing of the storage device (1) after a certain time in which the storage device (1) has not been used; and
setting (S25) the obtained reproduction time of the individual content data (70) transmitted by the transmitting section as the count time if the transmitting section transmits the individual content data, so that execution of shutdown processing of the storage device (1) in distribution of the content data is prevented.

10. A computer program product adapted to cause, when executed by a computer including a storage section (53) arranged to store content data, an input section (51,52) arranged to accept a transmission instruction stored in the storage section (53), and a transmitting section (52) arranged to transmit the content data on the basis of the transmission instruction accepted by the input section (51,52) the computer to perform the operation control method according to claim 9.

**Patentansprüche**

1. Eine Speichervorrichtung (1) mit einer Eingabesektion (51, 52), die dazu eingerichtet ist, einen Übertragungsbefehl zu empfangen, und einer Übertragungssektion (52), die dazu eingerichtet ist, Inhaltsdaten in Einheiten von individuellen Inhaltsdaten (70) auf Basis des durch die Eingabesektion (51, 52) empfangenen Übertragungsbefehls zu übertragen, wobei zwischen der Übertragung von Einheiten von individuellen Inhaltsdaten (70) ein Zeitraum erzeugt ist, in dem keine Inhaltsdaten übertragen werden, wobei die individuellen Inhaltsdaten (70) eine vordefinierte Wiedergabezeit haben, wobei die Speichervorrichtung (1) umfasst:

   eine Zeitgebereinheit (60), die dazu eingerichtet ist, eine Zählzeit ab einem beliebigen Zeitpunkt nach Beginn des Betriebs der Speichervorrichtung (1) zu zählen;
   eine Betriebssteuerung (62), die dazu eingerichtet ist, eine Steuerung durchzuführen, um den Betrieb der Speichervorrichtung (1) zu stoppen, wenn detektiert wird, dass nach dem Zählen der Zählzeit durch die Zeitgebereinheit (60) weder die Eingabesektion (51, 52) noch die Übertragungssektion (52) arbeitet, wobei die Steuerung die Ausführung einer Abschaltverarbeitung der Speichervorrichtung (1) nach einer bestimmten Zeit, in der die Speichervorrichtung (1) nicht verwendet wurde, umfasst,
   **dadurch gekennzeichnet, dass**
   die Speichervorrichtung (1) einen Wiedergabezeitdetektor (61) umfasst, der dazu eingerichtet ist, die vordefinierte Wiedergabezeit von individuellen Inhaltsdaten (70) aus einem Kopfteil (71) der individuellen Inhaltsdaten (70) oder durch Zugreifen auf eine Datenbank zu erhalten;
   wobei die Betriebssteuerung (62) dazu angepasst ist, die durch den Wiedergabezeitdetektor (61) erhaltene vordefinierte Wiedergabezeit der durch die Übertragungssektion (52) übertragenen individuellen Inhaltsdaten (70) als die Zählzeit einzustellen, wenn die Übertragungssektion (52) die individuellen Inhaltsdaten (70) überträgt, so dass die Ausführung der Abschaltverarbeitung der Speichervorrichtung (1) bei der Verteilung der Inhaltsdaten verhindert wird.

2. Die Speichervorrichtung (1) gemäß Anspruch 1, **dadurch gekennzeichnet, dass**
   die Betriebssteuerung (62) dazu angepasst ist, die Zählzeit um mindestens die durch den Wiedergabezeitdetektor (61) erhaltene vordefinierte Wiedergabezeit der durch die Übertragungssektion (52) übertragenen individuellen Inhaltsdaten (70) zu verlängern, wenn die Übertragungssektion (52) die individuellen Inhaltsdaten (70) überträgt.

3. Die Speichervorrichtung (1) gemäß Anspruch 2, **dadurch gekennzeichnet, dass**
   sie so angepasst ist, dass ein Vorgang der Verlängerung der Zählzeit durch die Betriebssteuerung (62) durch ein Ende der Übertragung der individuellen Inhaltsdaten (70) durch die Übertragungssektion (52) ausgelöst ist.

4. Die Speichervorrichtung gemäß einem der vorstehenden Ansprüche, **dadurch gekennzeichnet, dass** sie weiterhin eine Wiedergabezeit-Schätzeinheit umfasst, die dazu eingerichtet ist, eine Restzeit der Wiedergabe der individuellen Inhaltsdaten (70) in einer Wiedergabevorrichtung zu schätzen, die dazu eingerichtet ist, die durch die Übertragungssektion übertragenen Inhaltsdaten wiederzugeben.

5. Die Speichervorrichtung (1) gemäß Anspruch 4, **dadurch gekennzeichnet, dass**
   die Eingabesektion (51, 52) dazu angepasst ist, den Übertragungsbefehl von einer Vielzahl der Wiedergabevorrichtungen (2) zu empfangen,
   die Übertragungssektion (52) dazu angepasst ist, die Inhaltsdaten an die Vielzahl der Wiedergabevorrichtungen (2) zu übertragen, aus denen der Übertragungsbefehl erteilt wird,
   die Wiedergabezeit-Schätzeinheit (65) dazu angepasst ist, die Restzeit der Wiedergabe der individuellen Inhaltsdaten (70) in jeder von der Vielzahl der Wiedergabevorrichtungen (2) zu schätzen, und
   die Betriebssteuerung (62) dazu angepasst ist, die Zählzeit auf eine längste Restzeit der Wiedergabe aus den durch die Wiedergabezeit-Schätzeinheit (65) geschätzten Restzeiten der Wiedergabe zu verlängern, wenn die Übertragungssektion (52) die Inhaltsdaten überträgt.

6. Die Speichervorrichtung (1) gemäß einem der vorstehenden Ansprüche, **dadurch gekennzeichnet, dass** die Eingabesektion (51, 52) dazu angepasst ist, einen anderen Betriebsbefehl an die Speichervorrichtung (1) als den Übertragungsbefehl zu empfangen, und die Betriebssteuerung (62) dazu angepasst ist, die Zählzeit um eine bestimmte Zeit zu verlängern, wenn die Eingabesektion (51, 52) den Betriebsbefehl empfängt.

7. Die Speichervorrichtung (1) gemäß einem der Ansprüche 1 bis 6, **dadurch gekennzeichnet, dass** sie weiterhin eine Speichersektion (53) umfasst, die dazu eingerichtet ist, die Inhaltsdaten zu speichern.

8. Ein Inhalts-Wiedergabesystem (S), umfassend:

   eine Speichervorrichtung (1) gemäß einem der Ansprüche 1 bis 7 und
   eine Wiedergabevorrichtung (2),
   wobei
   die Wiedergabevorrichtung

   eine Eingabebefehlseinheit (33b), die eine Eingabe eines Übertragungsbefehls empfängt und den Übertragungsbefehl an die Speichervorrichtung (1) überträgt, und
   eine Wiedergabesektion (57), die die auf Basis des Übertragungsbefehls aus der Speichervorrichtung (1) übertragenen Inhaltsdaten wiedergibt, aufweist und

   wobei in der Speichervorrichtung (1)

   die Eingabesektion (51, 52) dazu angepasst ist, den aus der Wiedergabevorrichtung (2) übertragenen Übertragungsbefehl zu empfangen, und
   die Übertragungssektion (52) dazu angepasst ist, die Inhaltsdaten auf Basis des durch die Eingabesektion (51, 52) empfangenen Übertragungsbefehls an die Wiedergabevorrichtung (2) zu übertragen.

9. Ein Betriebssteuerungsverfahren für eine Vorrichtung mit einer Speichersektion (53), die dazu eingerichtet ist, Inhaltsdaten zu speichern, einer Eingabesektion, der dazu eingerichtet ist, einen in der Speichersektion (53) gespeicherten Übertragungsbefehl zu empfangen, und einer Übertragungssektion (52), die dazu eingerichtet ist, die Inhaltsdaten in Einheiten individueller Inhaltsdaten (70) auf Basis des durch die Eingabesektion (51, 52) empfangenen Übertragungsbefehls zu übertragen, wobei zwischen der Übertragung von Einheiten individueller Inhaltsdaten (70) ein Zeitraum, in dem keine Inhaltsdaten übertragen werden, erzeugt ist, wobei die individuellen Inhaltsdaten (70) eine vordefinierte Wiedergabezeit haben, wobei das Betriebssteuerungsverfahren **dadurch gekennzeichnet ist, dass** es umfasst:

   Zählen (S20) einer Zählzeit (a) ab einem beliebigen Zeitpunkt nach Beginn des Betriebs der Speichervorrichtung;
   Erhalten (S23) der vordefinierten Wiedergabezeit der individuellen Inhaltsdaten aus einem Kopfteil (71) der individuellen Inhaltsdaten (70) oder durch Zugreifen auf eine Datenbank;
   Ausführen einer Steuerung (S39), um den Betrieb der Speichervorrichtung zu stoppen, wenn detektiert wird, dass nach dem Zählen der Zählzeit weder die Eingabesektion noch die Übertragungssektion arbeitet, wobei die Steuerung die Ausführung einer Abschaltverarbeitung der Speichervorrichtung (1) nach einer bestimmten Zeit, in der die Speichervorrichtung (1) nicht verwendet wurde, umfasst; und
   Einstellen (S25) der erhaltenen Wiedergabezeit der durch die Übertragungssektion übertragenen individuellen Inhaltsdaten (70) als die Zählzeit, wenn die Übertragungssektion die individuellen Inhaltsdaten überträgt, so dass die Ausführung der Abschaltverarbeitung der Speichervorrichtung (1) bei der Verteilung der Inhaltsdaten verhindert wird.

10. Ein Computerprogrammprodukt, das dazu angepasst ist, bei Ausführung durch einen Computer mit einer Speichersektion (53), die dazu eingerichtet ist, Inhaltsdaten zu speichern, einer Eingabesektion (51, 52), die dazu eingerichtet ist, einen in der Speichersektion (53) gespeicherten Übertragungsbefehl zu empfangen, und einer Übertragungssektion (52), die dazu eingerichtet ist, die Inhaltsdaten auf Basis des durch die Eingabesektion (51, 52) empfangenen Übertragungsbefehls zu übertragen, zu bewirken, dass der Computer das Betriebssteuerungsverfahren gemäß Anspruch 9 durchführt.

**Revendications**

1. Un dispositif de stockage (1) comprenant une section d'entrée (51,52) conçue pour recevoir une instruction de transmission et une section de transmission (52) conçue pour transmettre des données de contenu en unités de données de contenu individuelles (70) sur la base de l'instruction de transmission acceptée par la section d'entrée (51,52), sachant qu'entre la transmission d'unités de données de contenu individuelles (70), une période de temps est générée pendant laquelle les données de contenu ne sont pas transmises, les données de contenu individuelles (70) ayant un temps de reproduction prédéfini, le dispositif de stockage (1) comprenant :

   une minuterie (60) conçue pour compter un temps prédéterminé à partir d'un moment arbitraire après le démarrage du fonctionnement du dispositif de stockage (1) ;
   un contrôleur de fonctionnement (62) conçu pour exercer le contrôle et arrêter le fonctionnement du dispositif de stockage (1), s'il détecte que ni la section d'entrée (51,52) ni la section de transmission (52) ne fonctionne après le comptage du temps prédéterminé par la minuterie (60), sachant que ledit contrôle comprend l'exécution d'un programme d'arrêt du dispositif de stockage (1) après un certain temps pendant lequel le dispositif de stockage (1) n'a pas été utilisé ;
   **caractérisé en ce que**
   le dispositif de stockage (1) comprend un détecteur de temps de reproduction (61) conçu pour obtenir le temps de reproduction prédéfini des données de contenu individuelles (70) provenant de l'en-tête (71) des données de contenu individuelles (70) ou en ayant accès à une base de données ;
   le contrôleur de fonctionnement (62) étant conçu pour sélectionner le temps de reproduction prédéfini indiqué par le détecteur de temps de reproduction (61) des données de contenu individuelles (70) transmises par la section de transmission (52) comme le temps prédéterminé, si la section de transmission (52) transmet les données de contenu individuelles (70), de sorte que l'exécution du programme d'arrêt du dispositif de stockage (1) dans la distribution des données de contenu est évité.

2. Le dispositif de stockage (1) selon la revendication 1, **caractérisé en ce que**
   le contrôleur de fonctionnement (62) est conçu pour prolonger le temps prédéterminé d'au moins le temps de reproduction prédéfini obtenu par le détecteur du temps de reproduction (61) des données de contenu individuelles (70) transmises par la section de transmission (52), si la section de transmission (52) transmet les données de contenu individuelles (70).

3. Le dispositif de stockage (1) selon la revendication 2, **caractérisé en ce qu'**
   Il est conçu de sorte que l'opération de prolongement du temps prédéterminé par le contrôleur de fonctionnement (62) est déclenchée à la fin de la transmission des données de contenu individuelles (70) par la section de transmission (52).

4. Le dispositif de stockage selon une des revendications précédentes, **caractérisé, en ce qu'**il comprend de plus une unité d'estimation du temps de reproduction conçue pour estimer le temps restant de reproduction des données de contenu individuelles (70) dans un dispositif de reproduction conçu pour reproduire les données de contenu transmises par la section de transmission.

5. Le dispositif de stockage (1) selon la revendication 4, **caractérisé en ce que**

   la section d'entrée (51,52) est conçue pour accepter l'instruction de transmission provenant d'une pluralité de dispositifs de reproduction (2),
   la section de transmission est conçue pour transmettre les données de contenu à la pluralité des dispositifs de reproduction (2) ayant émis l'instruction de transmission,
   l'unité d'estimation du temps de reproduction (65) est conçue pour estimer le temps restant de reproduction des données de contenu individuelles (70) dans chacun des dispositifs de la pluralité des dispositifs de reproduction (2), et
   le contrôleur de fonctionnement (62) est conçu pour prolonger le temps prédéterminé du temps restant de reproduction le plus long parmi les temps restants de reproduction estimés par l'unité d'estimation du temps de reproduction (65), si la section de transmission (52) transmet les données de contenu.

6. Le dispositif de stockage (1) selon une des revendications précédentes, **caractérisé, en ce que**

   la section d'entrée (51, 52) est conçue pour accepter une instruction d'opération destinée au dispositif de stockage (1) autre que l'instruction de transmission, et

le contrôleur de fonctionnement (62) est conçu pour prolonger le temps prédéterminé d'un certain temps, si la section d'entrée (51,52) accepte l'instruction d'opération.

**7.** Le dispositif de stockage (1) selon une des revendications 1 à 6, **caractérisé, en ce qu'**il comprend de plus une section de stockage (53) conçue pour stocker les données de contenu.

**8.** Un système de reproduction de contenu (S), comprenant

un dispositif de stockage (1) selon une des revendications 1 à 7 ; et
un dispositif de reproduction (2)
sachant que
le dispositif de reproduction comprend
une unité d'instruction d'entrée (33b) acceptant une entrée d'une instruction de transmission et transmettant l'instruction de transmission au dispositif de stockage (1), et
une section de reproduction (57) reproduisant les données de contenu transmises par le dispositif de stockage (1) sur la base de l'instruction de transmission, et
sachant que dans le dispositif de stockage (1)
la section d'entrée (51,52) est conçue pour accepter l'instruction de transmission transmise par le dispositif de reproduction (2), et
la section de transmission (52) est conçue pour transmettre les données de contenu au dispositif de reproduction (2) sur la base de l'instruction de transmission acceptée par la section d'entrée (51,52).

**9.** Un procédé de contrôle du fonctionnement pour un dispositif comprenant une section de stockage (53) conçue pour stocker des données de contenu, une section d'entrée conçue pour accepter une instruction de transmission stockée dans la section de stockage (53) et une section de transmission (52) conçue pour transmettre les données de contenu en unités de données de contenu individuelles (70) sur la base de l'instruction de transmission acceptée par la section d'entrée (51,52), sachant qu' entre la transmission des unités de données de contenu individuelles (70), une période de temps pendant laquelle les données de contenu ne sont pas transmises est générée, les données de contenu individuelles (70) ayant un temps de reproduction prédéfini, le procédé de contrôle du fonctionnement étant caractérisé en comprenant :

le comptage (S20) d'un temps prédéterminé (a) à partir d'un moment arbitraire après le début du fonctionnement du dispositif de stockage ;
l'obtention (S 23) du temps de reproduction prédéfini des données de contenu individuelles à partir d'un entête (71) des données de contenu individuelles (70) ou en ayant accès à une base de données ;
l'exécution d'un contrôle (S39) pour arrêter le fonctionnement du dispositif de stockage, s'il est détecté que ni la section d'entrée, ni la section de transmission ne fonctionne après le comptage du temps prédéterminé, sachant que ledit contrôle comprend l'exécution d'un programme d'arrêt du dispositif de stockage (1) après un certain temps au bout duquel le dispositif de stockage (1) n'a pas été utilisé et
la sélection du temps de reproduction (S25) obtenu des données de contenu individuelles (70) transmises par la section de transmission comme le temps prédéterminé, si la section de transmission transmet les données de contenu individuelles, de sorte que l'exécution du programme d'arrêt du dispositif de stockage (1) dans la distribution des données de contenu est évité.

**10.** Un produit de programme d'ordinateur conçu pour faire en sorte que, lorsqu'il est exécuté par un ordinateur comprenant une section de stockage (53) conçue pour stocker des données de contenu, une section d'entrée (51,52) conçue pour accepter une instruction de transmission (52) stockée dans la section de stockage (53), et une section de transmission (52) conçue pour transmettre les données de contenu sur la base de l'instruction de transmission acceptée par la section d'entrée (51,52) ledit ordinateur exécute le procédé de contrôle du fonctionnement conformément à la revendication 9.

EP 2 961 178 B1

# FIG.1

# F I G . 2

STORAGE DEVICE

1

20 — CPU

21 — ROM

22 — RAM

26a — HDD UNIT

26 HDD I/F

HDD

CONTENT FILE

26b   70

23

INPUT/OUTPUT DEVICE

23a — INPUT I/F

23b — INPUT INSTRUCTION UNIT

23c — USB I/F

24

DISPLAY UNIT

24a — DISPLAY DRIVER

24b — DISPLAY

NETWORK I/F

25

40

REMOTE CONTROL

OPERATION PARTS

40a

41

USB EQUIPMENT

2

REPRODUCING DEVICE

ROUTER

6

7

# FIG.3

# FIG.4

# F I G . 5

DMS SECTION

| CDS UNIT | ~520 |

| CONTENT INFORMATION PROVIDER | ~521 |

52

# F I G . 6

STORAGE SECTION

70 — CONTENT FILE

531 — CONTENT REGISTRATION LIST

532 — TIMER INFORMATION

533 --- REPRODUCTION TIME INFORMATION

53

# F I G . 7

DMP SECTION

CONTENT
REPRODUCER — 571

CONTENT DATA
ACQUIRER — 570

57

# F I G . 8

CONTENT FILE

| | |
|---|---|
| ID | ⟋74 |
| TRACK TITLE | ⟋75 |
| ARTIST NAME | ⟋76 |
| ALBUM TITLE | ⟋77 |
| GENRE | ⟋78 |
| TRACK LENGTH | ⟋79 |
| MUSIC CD IDENTIFIER | ⟋80 |
| USER DEFINITION INFORMATION | ⟋81 |
| ⋮ | |

71

THUMBNAIL IMAGE — 72

70a

CONTENT DATA — 73

70

# FIG.9

# FIG.10

START

S20

$T = \alpha$

②

S21

SCREEN DISPLAYING

S22 CONTENT DISTRIBUTION REQUESTED? — NO

YES

S23

ACQUISITION OF TRACK LENGTH

S24

ACQUISITION OF T

S25

T = T + TRACK LENGTH + X

②

S26 OPERATION INPUT MADE? — NO

YES

S27

ACQUISITION OF T

S28 T < X ? — NO

YES

S29

T = X

①

30

# FIG.11

①

S30　　　T = 0 ?　　　NO　②

YES

S31　SHUTDOWN INDICATION

YES　　S32　IN FILE R/W ?

NO

YES　　S33　FOLDER OPENED ?

NO

S34　OPERATION INPUT MADE ?　　NO

YES　　S35　ACQUISITION OF T

NO　　S36　T < Y ?

YES

S37　T = Y

S38　DELETION OF SHUTDOWN INDICATION

②

S39　SHUTDOWN PROCESSING

END

31

# FIG.12

EP 2 961 178 B1

F I G . 1 3

M3

M4

D4

DT4

L4+X

D5

DT5

L5+X

D6

DT6

L6+X

ON

OFF

# FIG.14

EP 2 961 178 B1

# FIG.15

# FIG.16

EP 2 961 178 B1

# FIG.17

START

S40
$$T = \alpha$$

②

S41
SCREEN DISPLAYING

S42
CONTENT BEING DISTRIBUTED? — NO

YES

S43
ACQUISITION OF REMAINING TRACK LENGTH

S44
$$T = A$$

③

S45
FOLDER OPENED? — NO — ①

YES

S46
ACQUISITION OF T

S47
$T < B$ ? — NO

YES

S48
$$T = B$$

③

# FIG.18

```
        ( 1 )
          │
          ▼
S49   ◇ OPERATION INPUT ◇ ──NO──┐
        MADE ?                   │
          │ YES                  │
S50   ┌─────────────────┐        │
      │ ACQUISITION OF T │       │
      └─────────────────┘        │
          │                      │
S51   ◇  T < B ? ◇ ──NO────────► │
          │ YES                  │
S52   ┌─────────┐                │
      │  T = B  │                │
      └─────────┘                │
( 3 )─────┤                      │
          ◄──────────────────────┘
S53   ◇  T < C ? ◇ ──NO──┐
          │ YES           │
          │        S56 ┌──────────────────┐
          │            │  NON-DISPLAYING OF │
          │            │    COUNTDOWN       │
          │            └──────────────────┘
          │                      │
S54   ◇  T ≦ 0 ? ◇ ──NO──┐       │
          │ YES           │      │
          │        S57 ┌──────────────────────┐
          │            │ DISPLAYING OF COUNTDOWN │
          │            │  COMMAND TO STOP       │
S55 ┌──────────────────┐│  STORAGE SECTION      │
    │ SHUTDOWN PROCESSING│└──────────────────────┘
    └──────────────────┘ S58 ┌──────────────────┐
          │                  │    SLEEP FOR      │
          ▼                  │ PREDETERMINED TIME│
       ( END )               └──────────────────┘
                                     │
                                     ▼
                                   ( 2 )
```

# FIG.19

REPRODUCING DEVICE2-1　D7　L(1)+x+C

REPRODUCING DEVICE2-2　D8　D9　L(2)+x+C

REPRODUCING DEVICE2-3　D10　L(3)+x+C

ON　OFF

EP 2 961 178 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005166172 A
- US 5170159 A
- US 2006067188 A1
- US 2012183270 A1
- US 6583947 B1